# EUROPEAN PATENT APPLICATION

(11) **EP 3 886 457 A1**
(43) Date of publication of application: **29.09.2021**
(21) Application number: 19887047.9
(22) Date of filing: 08.11.2019
(51) Int. Cl.: H04R 3/00, H04R 3/12, G10L 13/02, G10L 13/10, G06F 3/16, G10L 15/00, G10L 15/06, G10L 15/10, G10L 15/22

(54) **INFORMATION PROCESSING DEVICE AND INFORMATION PROCESSING METHOD**

(30) Priority: 21.11.2018 JP 2018217844
(71) Applicant: Sony Group Corporation, Minato-ku, Tokyo 108-0075 (JP)
(72) Inventor: TATEISHI Kazuya, Tokyo 108-0075 (JP); OGAWA Hiroaki, Tokyo 108-0075 (JP); TOTSUKA Noriko, Tokyo 108-0075 (JP); KAMADA Chie, Tokyo 108-0075 (JP); KOYAMA Yuichiro, Tokyo 108-0075 (JP); TSUNOO Emiru, Tokyo 108-0075 (JP); TAKAHASHI Akira, Tokyo 108-0075 (JP); TAKEDA Yuki, Tokyo 108-0075 (JP); MAEDA Yoshinori, Tokyo 108-0075 (JP); WATANABE Hideaki, Tokyo 108-0075 (JP); FUKUI Akira, Tokyo 108-0075 (JP); KURODA Kan, Tokyo 108-0075 (JP)
(74) Representative: 2SPL Patentanwälte PartG mbB
(86) International application number: PCT/JP2019/043805
(87) International publication number: WO 2020/105466

(57) **Abstract**

The present technology relates to an information processing device and an information processing method capable of improving the convenience of voice operation.

Provided is an information processing device including a control unit configured to perform control for giving an instruction on a function corresponding to an utterance for an operating apparatus that can operate an operation target apparatus having a function corresponding to the utterance on the basis of operation information regarding the operating apparatus that operates the operation target apparatus in a case where the utterance is made by the user. The present technology can be applied to, for example, a dedicated apparatus that can control a plurality of operating apparatuses.

## Description

### TECHNICAL FIELD

The present technology relates to an information processing device and an information processing method, and more particularly to an information processing device and an information processing method capable of improving the convenience of voice operation.

### BACKGROUND ART

In recent years, not only apparatuses (operating apparatuses) compatible with voice operation such as smart speakers, but also the Internet of Things (IoT) technology has become widespread in general households, and the number of home appliances (so-called smart home appliances) that can be controlled from operating apparatuses such as smartphones or smart speakers is increasing.

When using an operating apparatus compatible with this type of voice operation, it is common for the user to make an utterance including a wake-up word (e.g., name of operating apparatus, etc.) and the request content (see Patent Document 1, for example).

### CITATION LIST

### PATENT DOCUMENT

Patent Document 1: Japanese Patent Application Laid-Open No. 2001-022372

### SUMMARY OF THE INVENTION

### PROBLEMS TO BE SOLVED BY THE INVENTION

By the way, in a case where a plurality of operating apparatuses is used, the user needs to memorize as many wake-up words as existing operating apparatuses, and moreover, it becomes more difficult to memorize the correspondence relation, that is, which operating apparatus operates an operation target apparatus such as a smart home appliance, as the number of operating apparatuses increases.

Therefore, it has been required to improve the convenience of voice operation even in a case where a plurality of operating apparatuses is used.

The present technology has been made in view of such a situation, and is intended to improve the convenience of voice operation.

### SOLUTIONS TO PROBLEMS

An information processing device of one aspect of the present technology is an information processing device including a control unit that configured to perform control for giving an instruction on a function corresponding to an utterance for an operating apparatus that can operate an operation target apparatus having a function corresponding to the utterance on the basis of operation information regarding the operating apparatus that operates the operation target apparatus in a case where the utterance is made by a user.

An information processing method of one aspect of the present technology is an information processing method by an information processing device, the method including performing control for giving an instruction on a function corresponding to an utterance for an operating apparatus that can operate an operation target apparatus having a function corresponding to the utterance on the basis of operation information regarding an operating apparatus that operates an operation target apparatus in a case where the utterance is made by a user.

In an information processing device and an information processing method of one aspect of the present technology, control for giving an instruction on a function corresponding to an utterance is performed for an operating apparatus that can operate an operation target apparatus having a function corresponding to the utterance on the basis of operation information regarding an operating apparatus that operates an operation target apparatus in a case where the utterance is made by a user.

Note that an information processing device of one aspect of the present technology may be an independent device or an internal block constituting one device.

### BRIEF DESCRIPTION OF DRAWINGS

Fig. 1 is a diagram illustrating an example of a configuration including a plurality of operating apparatuses and a plurality of operation target apparatuses.
Fig. 2 is a diagram illustrating an example of a configuration including an information processing device in which the present technology is applied to the configuration of Fig. 1.
Fig. 3 is a block diagram illustrating an example of the configuration of an embodiment of an information processing device to which the present technology is applied.
Fig. 4 is a block diagram illustrating an example of the functional configuration of the control unit of Fig. 3.
Fig. 5 is a diagram illustrating a first example of a registration method of operation information.
Fig. 6 is a diagram illustrating a second example of a registration method of operation information.
Fig. 7 is a flowchart for explaining the flow of a first example of a registration process of operation information.
Fig. 8 is a flowchart for explaining the flow of a second example of a registration process of operation information.
Fig. 9 is a diagram illustrating a first example of a selection method of an operating apparatus.
Fig. 10 is a diagram illustrating a second example of a selection method of an operating apparatus.
Fig. 11 is a diagram illustrating a third example of a selection method of an operating apparatus.
Fig. 12 is a diagram illustrating a fourth example of a selection method of an operating apparatus.
Fig. 13 is a diagram illustrating a fifth example of a selection method of an operating apparatus.
Fig. 14 is a flowchart for explaining the flow of a command reproduction process.
Fig. 15 is a flowchart for explaining the flow of an operating apparatus selection process.
Fig. 16 is a diagram illustrating an example of command registration by a user.
Fig. 17 is a diagram illustrating an example of command information.
Fig. 18 is a diagram illustrating an example of a message to be shown on a screen of a mobile apparatus.
Fig. 19 is a diagram illustrating a first example of a command table at the time of adding a command.
Fig. 20 is a diagram illustrating a second example of a command table at the time of adding a command.
Fig. 21 is a diagram illustrating a third example of a command table at the time of adding a command.
Fig. 22 is a diagram illustrating a fourth example of a command table at the time of adding a command.
Fig. 23 is a diagram illustrating an example of expansion of the configuration using another speaker device.
Fig. 24 is a flowchart for explaining the flow of a user utterance registration process.
Fig. 25 is a flowchart for explaining the flow of command reproduction process.
Fig. 26 is a diagram illustrating another example of a configuration including an information processing device to which the present technology is applied.

### MODE FOR CARRYING OUT THE INVENTION

Embodiments of the present technology will be described hereinafter while referring to the drawings. Note that explanations will be given in the following order.
1. First embodiment
2. Second embodiment
3. Variations

### <1. First Embodiment>

With the spread of apparatuses compatible with voice operation such as smart speakers (AI speakers) or the IoT technology in general households, the number of IoT apparatuses such as smart home appliances installed in each household is increasing. Some operation target apparatuses such as IoT apparatuses correspond to different operating apparatuses (which will be hereinafter referred to as agents) such as smart speakers.

Therefore, although it is necessary to use corresponding agents properly in order to enable voice operation of the IoT apparatuses by the user, there arise problems that, for example, the user needs to memorize a number of wake-up words (WUW: Wake Up Word) to call a specific agent for each agent, and furthermore the correspondence between agents and IoT apparatuses become more difficult to understand as the number of agents and IoT apparatuses increases.

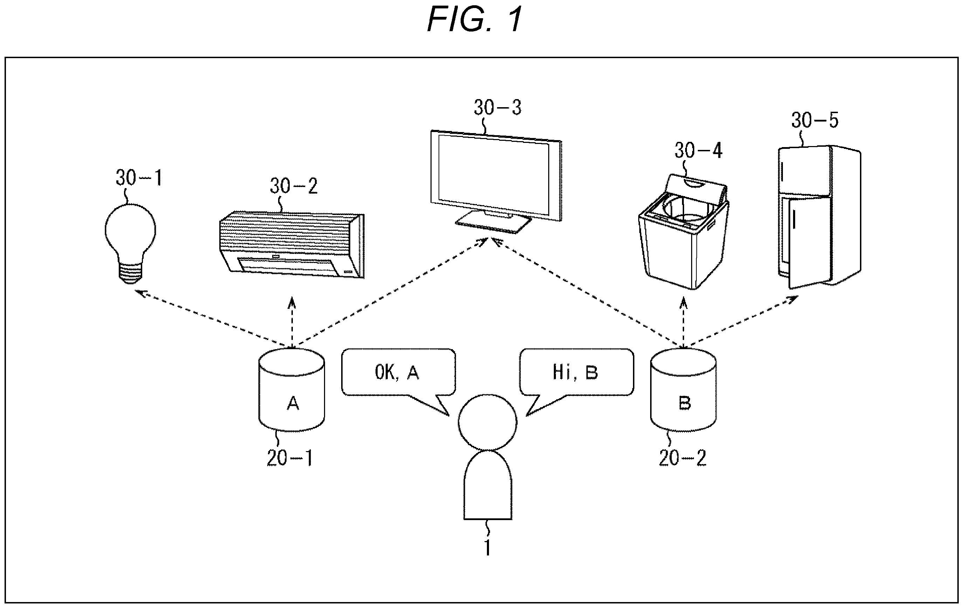

Specifically, assumed is a case where two operating apparatuses 20-1 and 20-2 are installed as agents A and B, and five operation target apparatuses 30-1 to 30-5 are installed as a plurality of IoT apparatuses as illustrated in Fig. 1.

In Fig. 1, the operation apparatus 20-1 as the agent A enables voice operation on the operation target apparatuses 30-1 to 30-3, that is, lighting equipment (e.g., home equipment lighting, etc.), air conditioning equipment (e.g., air conditioner, etc.), and a television receiver. Furthermore, the operating apparatus 20-2 as the agent B enables voice operation on the operation target apparatuses 30-3 to 30-5, that is, a television receiver, a washing machine, and a refrigerator.

In this case, a user 1 needs to make an utterance to an operating apparatuses 20 compatible with voice operation of an operation target apparatus 30 to be finally operated, by combining a wake-up word and the request content (command).

For example, in a case where the user 1 wants to turn on the lighting equipment as the operation target apparatus 30-1, it is necessary to make an utterance such as "OK, A, turn on the light" to the operating apparatus 20-1 as the agent A. Furthermore, for example, in a case where the user 1 wants to power on the television receiver as the operation target apparatus 30-3, it is necessary to make an utterance such as "OK, A, power on" to the operating apparatus 20-1, or "Hi, B, power on" to the operating apparatus 20-2.

Therefore, there are a variety of problems that, for example, there are so many wake-up words that the user forgets some wake-up words, the user 1 speaks to an operating apparatus 20 incompatible with voice operation of a desired operation target apparatus 30, or the user cannot memorize the correspondence relation since functions of the same operation target apparatus 30 to be operated correspond respectively to different operating apparatuses 20.

That is, in a case where at least two operating apparatuses 20 (agents) exist and moreover operation target apparatuses 30 (IoT apparatuses) that are targets respectively of voice operation by the two operating apparatuses 20 exist as in the configuration illustrated in Fig. 1, it becomes more difficult to memorize the correspondence relation, that is, which operating apparatus 20 operates which operation target apparatus 30, as the number of operating apparatuses 20 increases.

Furthermore, the user 1 needs to utter different wake-up words to perform voice operation on a plurality of operating apparatuses 20, and it can be said that it is inefficient in this respect that a plurality of operating apparatuses 20 (agents) is used.

Accordingly, in the present technology, a dedicated apparatus (device) that accepts all utterances from user 1 is provided, and this dedicated apparatus instructs a request to a corresponding operating apparatus 20 on the basis of the request content included in the utterance by the user 1, so as to improve the convenience of voice operation.

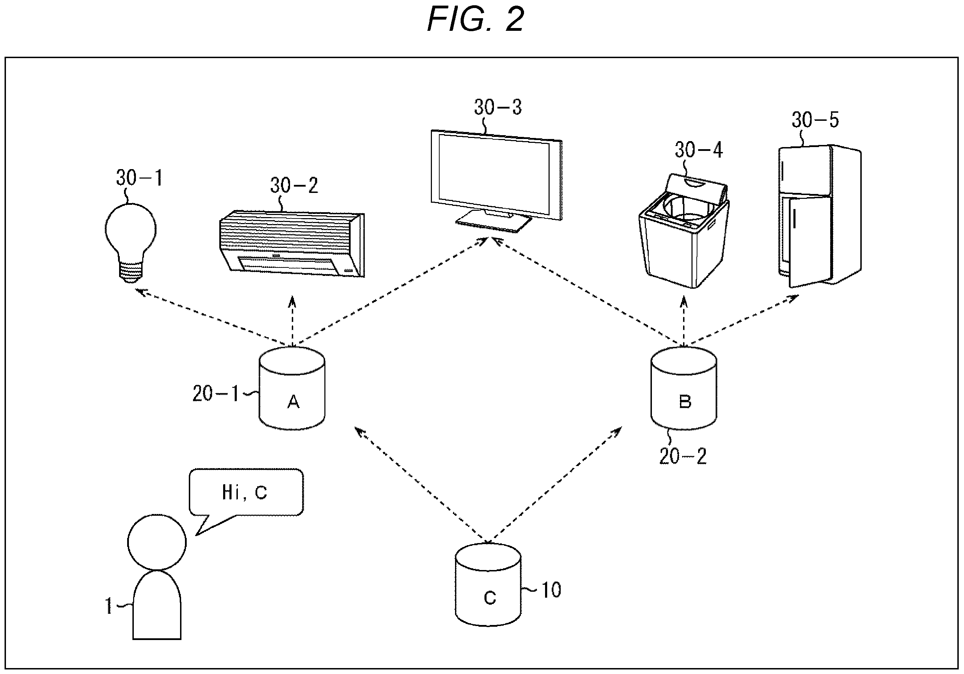

Specifically, an information processing device 10 is provided as a dedicated device as illustrated in Fig. 2, so as to accept all utterances from the user 1. Then, the information processing device 10 gives an instruction to the operating apparatus 20-1 or the operating apparatus 20-2 according to the request content included in the utterance by the user 1.

In order to turn on the lighting equipment as the operation target apparatus 30-1, for example, the user 1 is only required to make an utterance of "Hi, C, turn on the light" to the information processing device 10. Furthermore, in order to power on the television receiver as the operation target apparatus 30-3, for example, the user 1 is only required to make an utterance of "Hi, C, power on" to the information processing device 10.

In this way, even if the number of operating apparatuses 20 installed increases, the apparatus to talk to is always the same apparatus, that is, the information processing device 10, and therefore the user 1 is only required to memorize one wake-up word (e.g., Hi, C).

Furthermore, since the information processing device 10 appropriately distributes a request according to the request content included in the utterance by the user 1, the user 1 needs not to memorize the correspondence relation between an operating apparatus 20 and an operation target apparatus 30. As a result, it is possible to prevent the user 1 from talking to an operating apparatus 20 incompatible with voice operation of a desired operation target apparatus 30.

Here, the information processing device 10 makes it possible to give an instruction by voice when giving an instruction to the operating apparatus 20. In other words, it can be said that the information processing device 10 outputs voice (voice corresponding to utterance from user 1) to the operating apparatus 20 instead of the user 1.

For example, in a case where the user 1 makes an utterance of "Hi, C, turn on the light", the information processing device 10 outputs voice of "OK, A, turn on the light" to the operating apparatus 20-1. Furthermore, in a case where the user 1 makes an utterance of "Hi, C, power on", the information processing device 10 outputs voice of "OK, A, power on" to the operating apparatus 20-1 or outputs voice of "Hi, B, power on" to the operating apparatus 20-2. Note that the countermeasure for a case where the same operation target apparatus 30 can be operated by a plurality of operating apparatuses 20 will be described later.

In this way, the information processing device 10 makes it possible to give an instruction to an operation target apparatus 30 that can be connected only with a specific operating apparatus 20, by giving an instruction by voice output. Furthermore, since the information processing device 10 outputs voice corresponding to the utterance, the user 1 can intuitively understand that the instruction corresponding to his/her own utterance is given by checking the voice output.

Moreover, although some users 1 are bad at speaking smoothly, speak with provincial accents, or cannot make a loud voice, for example, instructions to the operating apparatus 20 can be reliably recognized when voice (voice that can be recognized by agent) processed by voice synthesis (e.g., text voice synthesis (TTS: Text To Speech)) or the like is outputted on the information processing device 10 side instead of the utterance of the user 1. As a result, accessibility can be improved.

In the present disclosure, note that the operating apparatus 20-1 and the operating apparatus 20-2 are each simply referred to as an operating apparatus 20 in a case where it is unnecessary to distinguish therebetween. Furthermore, the operation target apparatuses 30-1 to 30-5 are each simply referred to as an operation target apparatus 30 in a case where it is unnecessary to distinguish therebetween.

Furthermore, the operating apparatus 20 is a device compatible with voice operation such as a smart speaker, for example. An operating apparatus 20 such as this type of smart speaker is also referred to as an agent, and is provided by a business operator that provides a platform for a voice AI assistant service, or is provided as a device that uses an external voice AI assistant service, for example. Note that the operating apparatus 20 may be incorporated in another device such as a television receiver, for example.

Furthermore, in this kind of voice AI assistant service, it is common to use a wake-up word, which is a preset keyword, in order to activate the service. Illustrated in the present disclosure is, for example, a case where "OK, A" for the operating apparatus 20-1, "Hi, B" for the operating apparatus 20-2, and "Hi, C" for the information processing device 10 are used as wake-up words.

### (Configuration of information processing device)

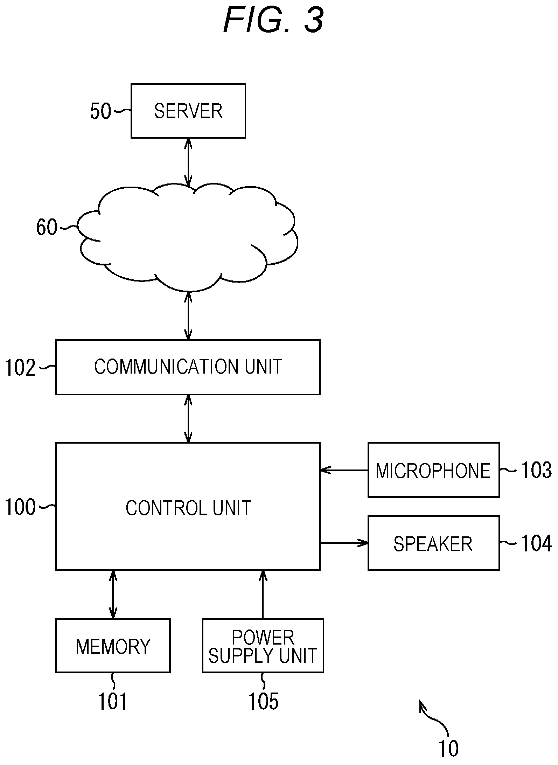

Fig. 3 is a block diagram illustrating an example of the configuration of an embodiment of an information processing device to which the present technology is applied. Note that the configuration example illustrated in Fig. 3 illustrates the configuration of the information processing device 10 in Fig. 2.

The information processing device 10 is a dedicated apparatus (device) that receives an utterance by the user 1 and can control a plurality of operating apparatuses 20. Note that the information processing device 10 is not limited to a dedicated device, and may be incorporated in another device such as a smart speaker (agent), a smartphone, or a television receiver, for example.

In Fig. 3, the information processing device 10 includes a control unit 100, a memory 101, a communication unit 102, a microphone 103, a speaker 104, and a power supply unit 105.

The control unit 100 is configured with, for example, a central processing unit (CPU), a microcomputer, or the like. The control unit 100 controls the operation of each unit of the information processing device 10.

The memory 101 is configured with a storage device such as a semiconductor memory, for example. The memory 101 records various data according to the control from the control unit 100.

The communication unit 102 is configured with a communication module or the like compatible with wireless communication such as a wireless local area network (LAN), cellular communication (e.g., LTE-Advanced, 5G, etc.), or the like. The communication unit 102 exchanges various data with a server 50 via a network 60 including the Internet according to control from the control unit 100.

Note that the communication unit 102 may include, for example, a short-range wireless communication module compatible with a short-range wireless communication method such as the Bluetooth (registered trademark) standard, an infrared communication module compatible with infrared communication, or the like. Therefore, data can be exchanged with, for example, another device installed at home.

The microphone 103 converts external sound (voice) into an electric signal, and supplies a voice signal obtained as a result to the control unit 100. Note that at least one microphone 103 is provided.

The speaker 104 performs necessary processing on the voice signal supplied from the control unit 100, and outputs voice according to the voice signal. Note that at least one speaker 104 is provided.

The power supply unit 105 supplies the power source power obtained from an external power source or a storage battery to each unit of the information processing device 10 including the control unit 100 according to control from the control unit 100.

Note that the configuration of the information processing device 10 illustrated in Fig. 3 shows the minimum configuration, and may include, for example, a display unit (display device) that displays information such as an image, video, or text, a camera unit including an image sensor and a signal processing unit such as a camera image signal processor (ISP), a sensor unit including various sensors (e.g., human sensor, etc.) that perform sensing for obtaining a variety of information regarding the periphery, or the like.

Specifically, by providing a camera unit or a sensor unit and analyzing captured images or sensed data, it becomes possible to confirm the presence or absence of a user existing in the vicinity of the information processing device 10, detect a recognition error by an operating apparatus 20, and provide feedback for correcting the reproduction volume or a reproduction speaker, for example. Furthermore, for example, a unit obtained by superimposing a touch panel on a screen may be provided as a display unit, or a physical button may be provided on the information processing device 10, to accept input operation from the user 1.

### (Functional configuration of control unit)

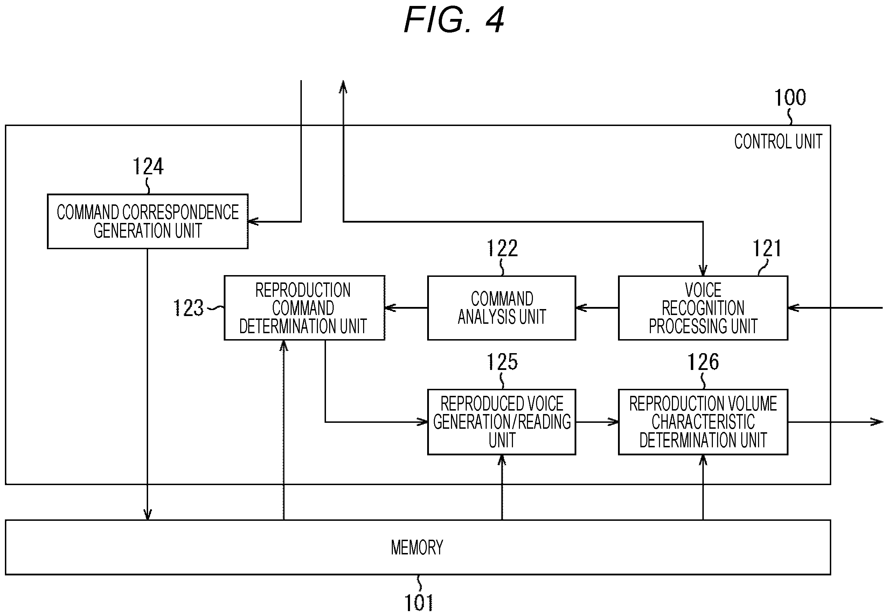

Fig. 4 is a block diagram illustrating an example of the functional configuration of the control unit 100 of Fig. 3.

In Fig. 4, the control unit 100 includes a voice recognition processing unit 121, a command analysis unit 122, a reproduction command determination unit 123, a command correspondence generation unit 124, a reproduced voice generation/reading unit 125, and a reproduction volume characteristic determination unit 126.

Furthermore, in the memory 101, information (hereinafter referred to as operation information) regarding an operating apparatus 20 that operates an operation target apparatus 30, and information (hereinafter referred to as reproduction information) regarding a reproduction method for an operating apparatus 20 are recorded in advance. Note that the operation information corresponds to, for example, a command table described later.

The voice recognition processing unit 121 performs a voice recognition process on a voice signal from the microphone 103, and supplies the processing result to the command analysis unit 122.

Performed in this voice recognition process are, for example, processes such as a conversion process of converting voice data into text data, a semantic analysis process of converting the conversion processing result into an expression that can be understood by a machine, and a natural language process such as morphological analysis or parsing analysis. Note that all of the processes included in this voice recognition process may be performed in the voice recognition processing unit 121, or all or some of the processes may be performed by the server 50 via the network 60 and the processing result may be supplied to the voice recognition processing unit 121.

The command analysis unit 122 performs an analysis process of analyzing the request content (command) included in the utterance by the user 1 on the basis of the processing result supplied from the voice recognition processing unit 121, and supplies the processing result to the command determination unit 123.

The reproduction command determination unit 123 performs a determination process of determining a command for the operating apparatus 20 while suitably referring to the operation information recorded in the memory 101 on the basis of the processing result supplied from the command analysis unit 122, and supplies the processing result to the reproduced voice generation/reading unit 125.

However, the operating apparatus 20 that is the target of this command is an operating apparatus 20 that can operate the operation target apparatus 30 having a function according to the request content included in the utterance by the user 1. Although the details will be described later, note that the command correspondence generation unit 124 can, for example, add, update, or delete the information included in the operation information (e.g., command table) recorded in the memory 101 by exchanging various information with the server 50 via the network 60.

The reproduced voice generation/reading unit 125 generates reproduced voice on the basis of the determined command or the like while suitably referring to the operation information or the reproduction information recorded in the memory 101 on the basis of the processing result supplied from the reproduction command determination unit 123, or performs a process of reading recorded voice from the memory 101 and supplies the processing result to the reproduction volume characteristic determination unit 126.

The reproduction volume characteristic determination unit 126 performs a determination process of determining the characteristic of the reproduction volume of voice outputted from the speaker 104 while suitably referring to the reproduction information recorded in the memory 101 on the basis of the processing result supplied from the reproduced voice generation/reading unit 125, and supplies the processing result to the speaker 104. Therefore, the speaker 104 outputs a voice whose reproduction volume characteristic has been adjusted as a voice corresponding to a command to be reproduced on the basis of the utterance by the user 1.

Note that the example of the functional configuration of the control unit 100 illustrated in Fig. 4 is an example and is not limited to the configuration, and other configurations may be employed. For example, other components may be added to the functional configuration of the control unit 100 illustrated in Fig. 4.

The information processing device 10 is configured as described above.

### (Example of operation information)

In the information processing device 10, operation information is recorded in the memory 101. In the information processing device 10, the control unit 100 determines (selects) an operating apparatus 20 that can operate an operation target apparatus 30 having a function corresponding to the utterance of the user 1 on the basis of this operation information, and outputs a voice related to the function to the determined operating apparatus 20.

Here, the operation information is information that dynamically changes due to an increase or decrease in the number of the operating apparatus 20 or the operation target apparatuses 30, addition of functions, or the like. This operation information is recorded in the memory 101, for example, and can be suitably referred to by the control unit 100.

Specifically, the operation information includes, for example, a wake-up word, information regarding a command, or the like for each operating apparatus 20, and can add, update, or delete such information, for example. Note that the command is a command for performing voice operation of the operation target apparatus 30.

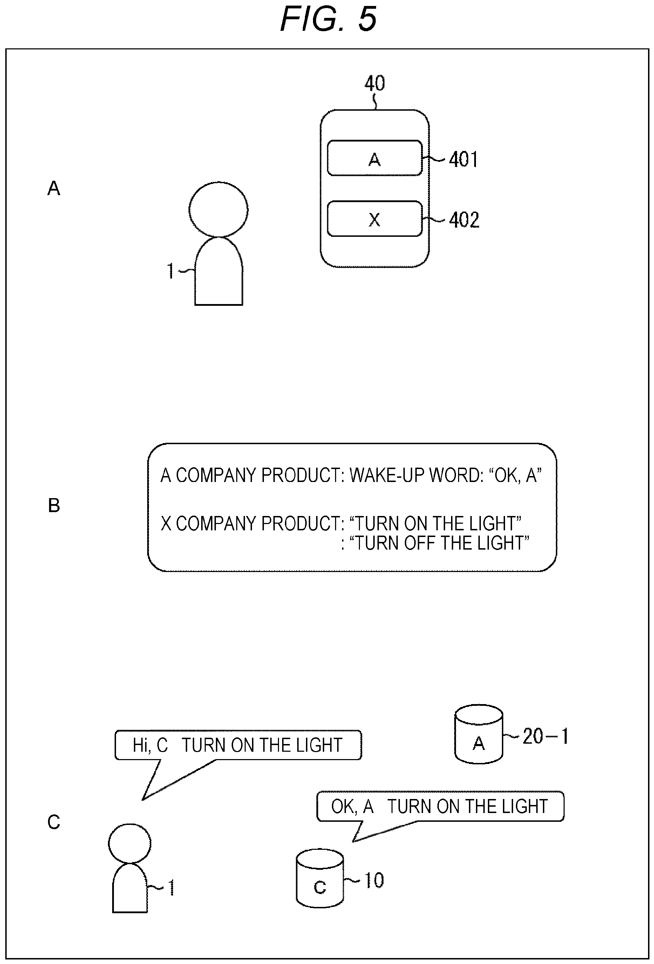

Fig. 5 illustrates a first example of a registration method of operation information.

For example, the user 1 can register a new command using a mobile apparatus 40 such as a smartphone or a tablet terminal (A in Fig. 5).

At this time, in the mobile apparatus 40, for example, a dedicated application is started, so that a combination of information 401 regarding the operating apparatus 20-1 as the agent A manufactured by A Company and information 402 regarding the operation target apparatus 30-1 as the lighting equipment (IoT apparatus) manufactured by X Company can be inputted. The information inputted in this way is transmitted from the mobile apparatus 40 to the information processing device 10 via, for example, the network 60.

Then, the information processing device 10 can read the information (preset information) recorded in the memory 101 or the like on the basis of information (e.g., information regarding manufacturer or device, etc.) transmitted from the mobile apparatus 40 so as to register the operation information. As this operation information, for example, a combination of a wake-up word of "OK, A" for agent A manufactured by A Company, and commands of "turn on the light" and "turn off the light" for lighting equipment manufactured by X Company is added (B in Fig. 5).

In a case where such registration is made, for example, when the user 1 makes an utterance of "Hi, C, turn on the light", the information processing device 10 outputs a voice of "OK, A, turn on the like" to the operating apparatus 20-1 on the basis of the operation information (C in Fig. 5). Therefore, the operating apparatus 20-1 turns on the lighting equipment as the operation target apparatus 30-1 in response to the voice output from the information processing device 10. In this example, the information processing device 10 selects "OK, A" as the wake-up word for the operating apparatus 20-1.

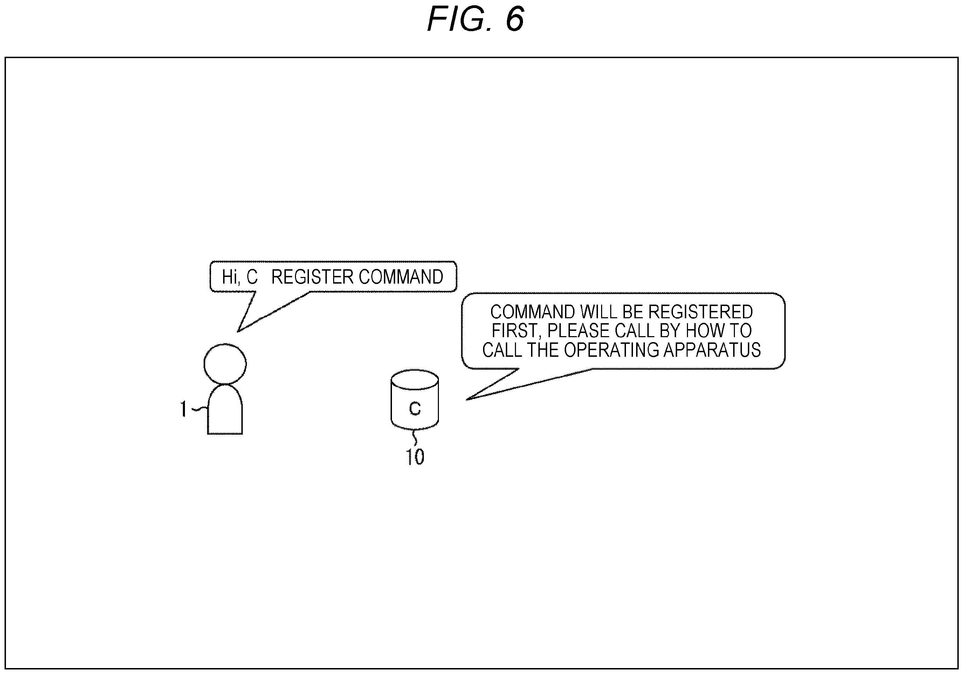

Fig. 6 illustrates a second example of a registration method of operation information.

For example, in a case where the user 1 makes an utterance of "Hi, C, command registration", the information processing device 10 outputs a voice of "Command registration is performed. First, please call by how to call the operating apparatus." When the user 1 makes an utterance of "OK, A, turn on the light" to this voice output, for example, the information processing device 10 can register a combination of a wake-up word of "OK, A" and a command of "turn on the light" as the operation information.

Therefore, in a case where the user 1 makes an utterance of "Hi, C, turn on the light", the information processing device 10 outputs a voice of "OK, A, turn on the light" on the basis of the operation information, so that the operating apparatus 20-1 can turn on the lighting equipment as the operation target apparatus 30-1 (similar to the example of C in Fig. 5 described above).

As described above, for example, a registration method of various information using the mobile apparatus 40 (registration by screen operation), a method of registering various information by voice interaction between the user 1 and the information processing device 10 (manual registration corresponding to accessibility), or the like can be used as a method of registering the operation information to be used in the information processing device 10. That is, the registration method of operation information described above is an example, and the operation information may be registered by another registration method.

### (Flow of first example of registration process)

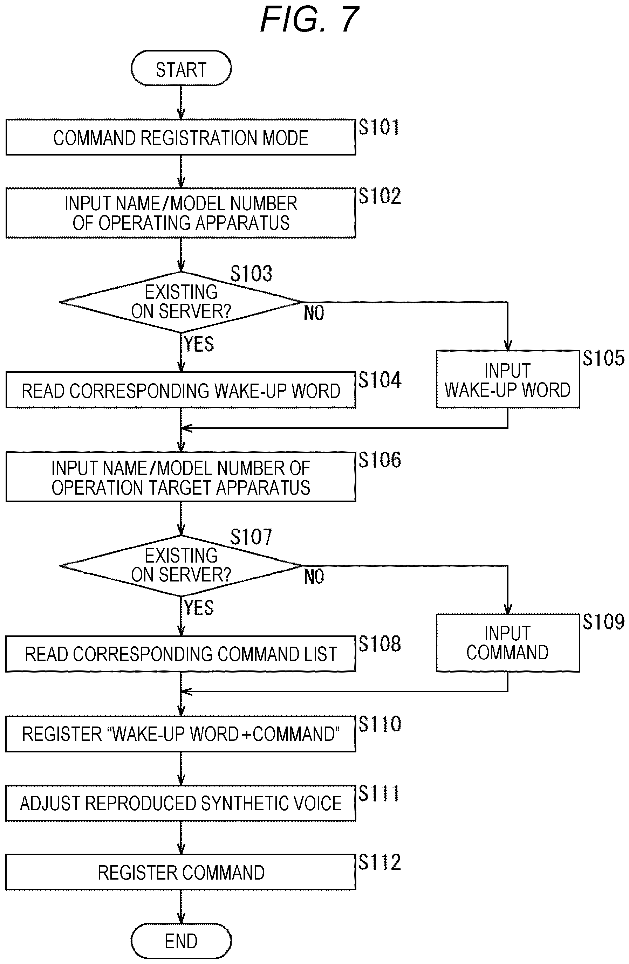

Here, the flow of the first example of the operation information registration process to be executed by the information processing device 10 and the mobile apparatus 40 will be described with reference to the flowchart of Fig. 7.

The information processing device 10 and the mobile apparatus 40 start operation in the command registration mode, for example, in a case where a dedicated application is started (S101).

At this time, in the mobile apparatus 40, the name, the model number, or the like of the operating apparatus 20 is inputted (e.g., text input) by the user 1 (S102), and whether a wake-up word exists on the server 50 or not is judged by inquiring the server 50 of whether a wake-up word corresponding to the inputted name, model number, or the like is recorded or not (S103).

In a case where it is judged in the judgement process of step S103 that the wake-up word exists on the server 50, the process proceeds to step S104. In this case, a corresponding wake-up word is read from the information (data) recorded by the server 50 (S104).

On the other hand, in a case where it is judged that no wake-up word exists on the server 50, the process proceeds to step S105. In this case, a wake-up word is inputted (e.g., text input) to the mobile apparatus 40 by the user 1 (S105).

When a wake-up word related to the target operating apparatus 20 is acquired in the process of step S104 or S105, the wake-up word is finally passed to the information processing device 10, and the process proceeds to step S106.

Then, in the mobile apparatus 40, the name, the model number, or the like of the operation target apparatus 30 is inputted (e.g., text input) by the user 1 (S106), and whether a command exists on the server 50 or not is judged by inquiring the server 50 of whether a command corresponding to the inputted name, model number, or the like is recorded or not (S107).

In a case where it is judged in the judgement process of step S107 that a command exists on the server 50, the process proceeds to step S108. In this case, a corresponding command list is read from information (data) recorded in the server 50 (S108).

On the other hand, in a case where it is judged that no command exists on the server 50, the process proceeds to step S109. In this case, in the mobile apparatus 40, one or a plurality of commands is inputted (e.g., text input) by the user 1 (S109).

When a command related to the target operation target apparatus 30 is acquired in the process of step S108 or S109, the command is finally passed to the information processing device 10, and the process proceeds to step S110.

Then, the information processing device 10 registers the acquired wake-up word and command in the operation information (e.g., command table described later) (S110).

Furthermore, the information processing device 10 adjusts the synthetic voice to be reproduced by text voice synthesis (TTS) using the wake-up word and the (text of) command registered in the operation information (S111), and registers the adjusted command (of synthetic voice) (S112). Note that the registration process is terminated when the process of step S112 ends.

The flow of the first example of the registration process has been described above.

### (Flow of second example of registration process)

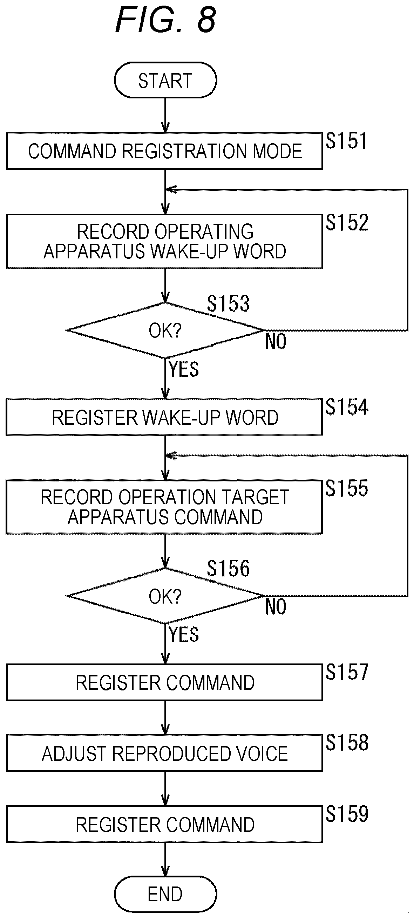

Next, the flow of the second example of the operation information registration process to be executed by the information processing device 10 will be described with reference to the flowchart of Fig. 8

In the information processing device 10, in a case where the user 1 makes an utterance of "Hi, C, register command", for example, the operation in the command registration mode is started (S151). At the start of this operation, note that voice output such as explanation or the like of the fact that the command registration is performed or a registration method of a command may be made.

At this time, the information processing device 10 records the wake-up word of the operating apparatus 20 in response to the utterance by the user 1 (S152).

Here, the process of step S152 is repeated until the recording of the wake-up word is completed normally ("YES" in S153), and when the utterance of "OK, A" is recorded, for example, the process proceeds to step S154. Then, the information processing device 10 registers the recorded wake-up word in the operation information (e.g., command table described later) (S154).

When the wake-up word is registered in the process of step S154, the process proceeds to step S155. Then, the information processing device 10 records the command of the operation target apparatus 30 in response to the utterance by the user 1 (S155).

Here, the process of step S155 is repeated until the recording of the command is completed normally ("YES" in S156), and when an utterances such as "turn on the light" or "turn off the light" is recorded, for example, the process proceeds to step S157. Then, the information processing device 10 registers one or a plurality of commands in the operation information (e.g., command table described later) (S157).

Furthermore, the information processing device 10 adjusts voice to be reproduced using the wake-up word and the (recorded voice of) command registered in the operation information (S158), and registers the adjusted command (or recorded voice) (S159). Note that the registration process is terminated when the process of step S159 ends.

The flow of the second example of the registration process has been described above.

### (Realization of operation that matches user's intention)

By the way, when the same operation target apparatus 30 (IoT apparatus) can be operated by a plurality of operating apparatuses 20 (agents), the operating apparatuses 20 have different commandable commands in some cases, or have the same commandable command in the other cases.

Here, in the former case, that is, in a case where the same operation target apparatus 30 that can be operated by a plurality of operating apparatuses 20 has different commandable commands, the information processing device 10 gives an instruction to a corresponding operating apparatus 20 using (output of voice corresponding to) a command according to a request on the basis of the request content included in the utterance of the user 1.

Specifically, supposed is a case where the operation target apparatus 30-3 as a television receiver can be powered on/off from the operating apparatus 20-1 (agent A) while the volume adjustment can be operated from the operating apparatus 20-2 (agent B).

In this case, in a case where the user 1 makes an utterance of "Hi, C, power on", for example, the information processing device 10 outputs a voice of "OK, A, power on" to the operating apparatus 20-1. Therefore, the operation target apparatus 30-3 (television receiver) is powered on by the operating apparatus 20-1 that can operate powering on/off.

Furthermore, in a case where the user 1 makes an utterance of "Hi, C, volume down", for example, the information processing device 10 outputs a voice of "Hi, B, volume down" to the operating apparatus 20-2. Therefore, the volume of the operation target apparatus 30-3 (television receiver) is lowered by an operating apparatus 20-2 that can operate the volume adjustment.

In this way, although the user 1 conventionally has to memorize the wake-up words and command contents of the operating apparatus 20-1 (agent A) and the operating apparatus 20-2 (agent B), the request is appropriately distributed to the operating apparatus 20 according to the request content included in the utterance by the user 1, since the information processing device 10 is provided. Therefore, the user 1 is only required to tell the desired purpose to the information processing device 10 to perform the desired voice operation, and therefore the convenience of voice operation can be improved.

On the other hand, in the latter case, that is, in a case where the same operation target apparatus 30 that can be operated by a plurality of operating apparatuses 20 have the same commandable commands, the information processing device 10 selects an operating apparatus 20 whose voice output is more easily recognized as a selected operating apparatus from the operating apparatuses 20 that can operate to deal with the same command, so that a voice corresponding to the command is outputted to the selected operating apparatus.

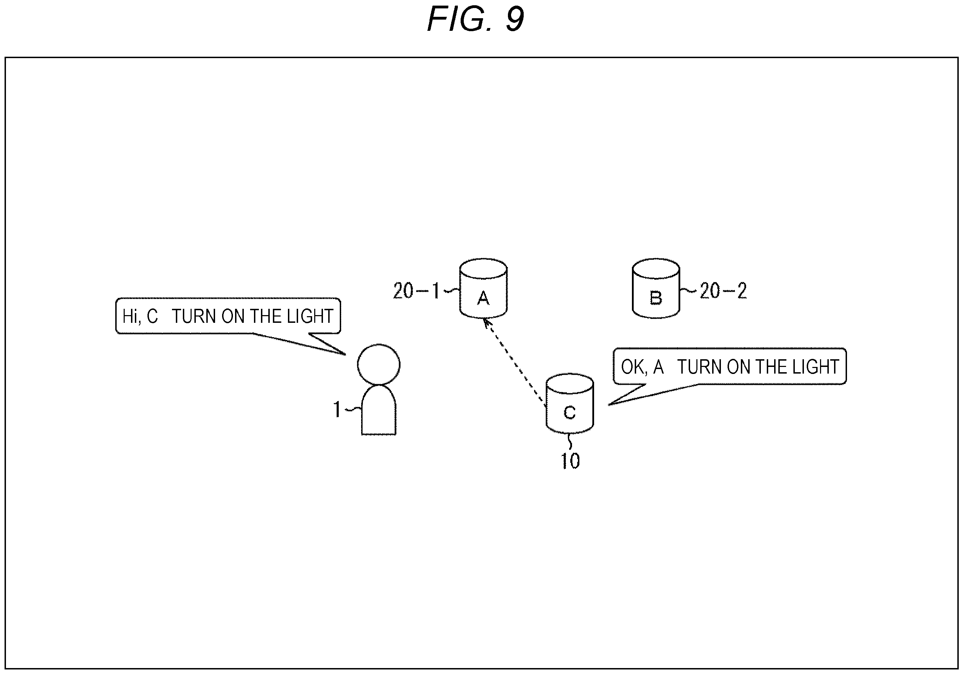

As the selection method of a selected operating apparatus here, for example, any one of the five selection methods illustrated in Figs. 9 to 13 can be used. In Figs. 9 to 13, note that it is assumed that both the operating apparatus 20-1 (agent A) and the operating apparatus 20-2 (agent B) can operate powering on/off of the operation target apparatus 30-1 (lighting equipment).

### (a) First example

As the first selection method, there is a method of selecting an operating apparatus 20 existing closer to the user 1 as the selected operating apparatus as illustrated in Fig. 9.

Specifically, the information processing device 10 acquires the position information of the user 1 and the position information of the operating apparatus 20-1 and the operating apparatus 20-2, as well as its own position information.

On the basis of the acquired position information, the information processing device 10 selects the operating apparatus 20-1 as the selected operating apparatus, since the installation position of the operating apparatus 20-1 is closer to the position of the user 1 than the installation position of the operating apparatus 20-2. Then, in the information processing device 10, a voice corresponding to the command is outputted to the operating apparatus 20-1 as the selected operating apparatus.

### (b) Second example

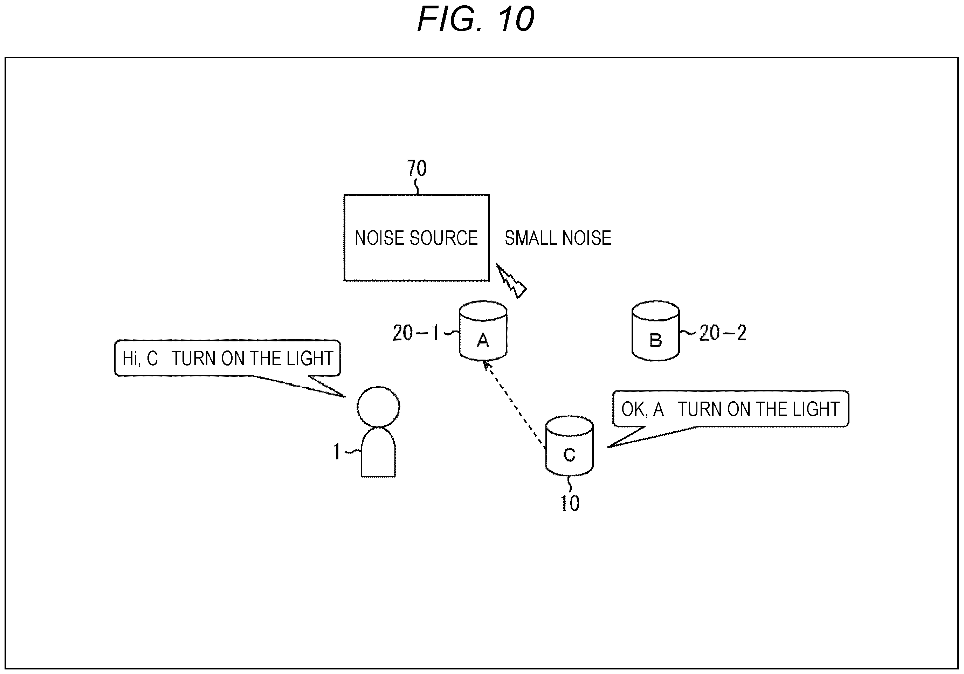

As a second selection method, there is a method of selecting an operating apparatus 20 that can deal by increasing the reproduction volume of voice output as a selected operating apparatus in a case where a noise source 70 that emits noise exists and when the noise level is low, as illustrated in Fig. 10.

Specifically, in the first selection method described above, the information processing device 10 acquires noise information regarding noise of the noise source 70 on the premise of a case where it is detected that the installation position of the operating apparatus 20-1 is closer to the position of the user 1. This noise information is information obtained from a voice signal collected by the microphone 103, for example, and includes at least information regarding a noise direction or a noise level.

When the noise level of the noise source 70 existing in the vicinity of the operating apparatus 20-1 becomes lower than a predetermined threshold value on the basis of the acquired noise information, that is, in a case where it is judged that the noise level of the noise source 70 is low and the influence thereof on the operating apparatus 20-1 is small, the information processing device 10 selects the operating apparatus 20-1 closer to the position of the user 1 as the selected operating apparatus.

Then, the information processing device 10 outputs a voice corresponding to the command at a larger reproduction volume (e.g., output at a larger reproduction volume than voice output in first selection method described above). Therefore, even in a case where the noise source 70 exists in the vicinity of the operating apparatus 20-1, a sound can be outputted to the operating apparatus 20-1 without unavoidably selecting the operating apparatus 20-2.

### (c) Third example

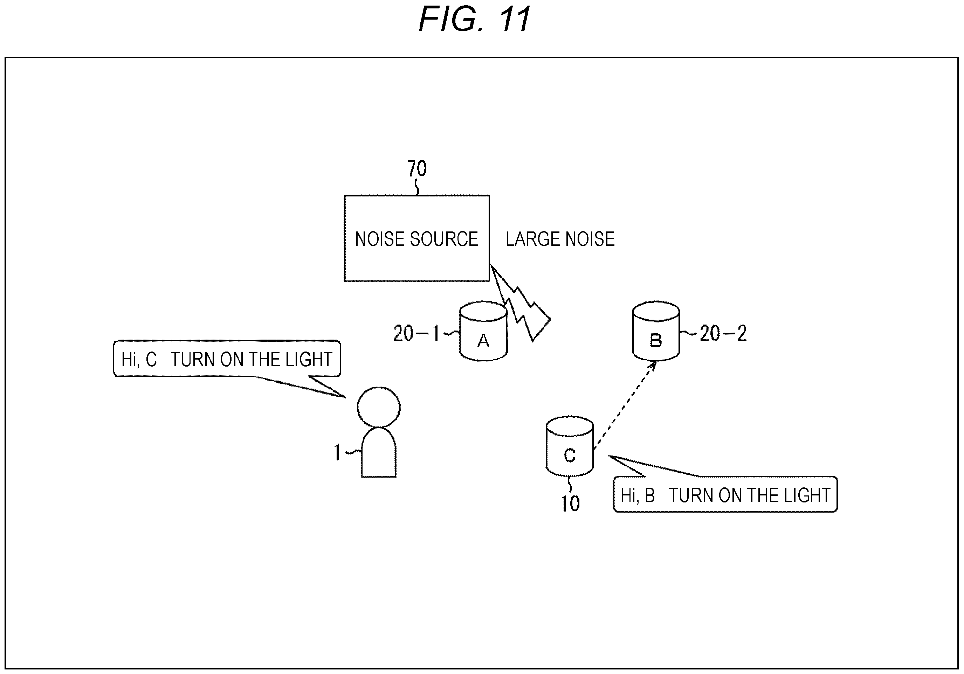

As a third selection method, there is a method of avoiding an operating apparatus 20 existing in the noise direction and selecting an operating apparatus 20 installed in a direction different from the noise direction as a selected operating apparatus in a case where the noise source 70 exists and the noise level thereof is large, as illustrated in Fig. 11.

Specifically, in the first selection method described above, the information processing device 10 acquires noise information regarding noise of the noise source 70 on the premise of a case where it is detected that the installation position of the operating apparatus 20-1 is closer to the position of the user 1.

On the basis of the acquired noise information, the information processing device 10 selects the operating apparatus 20-2 installed in a direction different from the noise direction as a selected operating apparatus when the noise level of the noise source 70 existing in the vicinity of the operating apparatus 20-1 becomes equal to or higher than a predetermined threshold value, that is, in a case where it is judged that the noise level of the noise source 70 is large and the influence thereof is larger than that of the operating apparatus 20-1.

Then, the information processing device 10 outputs a voice corresponding to the command (outputted at the same reproduction volume as the sound output in the first selection method described above, for example).

### (d) Fourth example

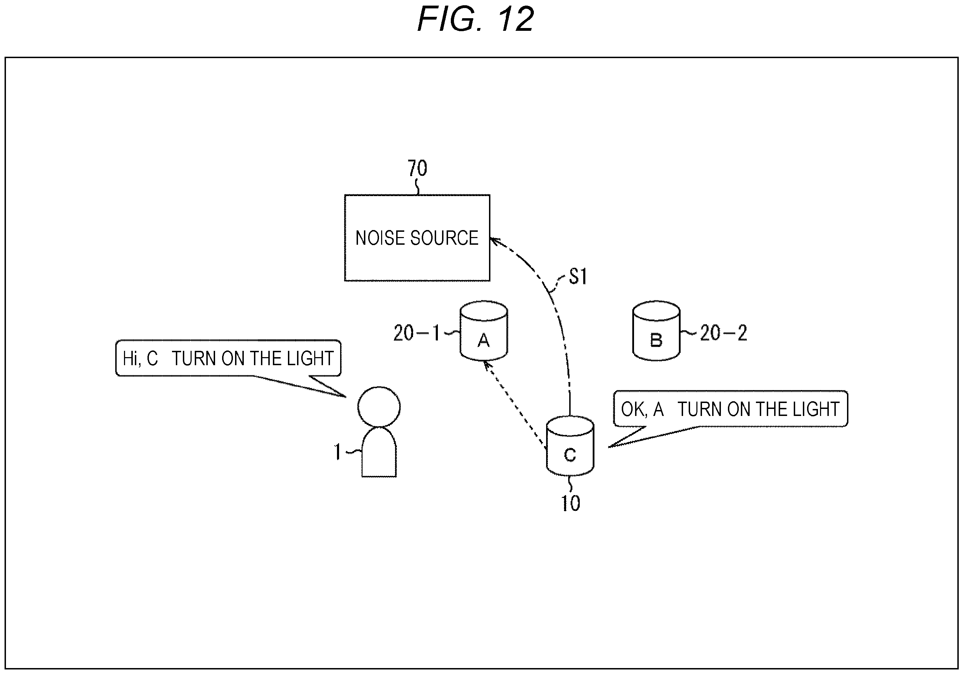

As a fourth selection method, there is a method of selecting an operating apparatus 20 compatible with voice output as the selected operating apparatus in a case where the noise source 70 exists, when the noise can be controlled, and when the noise is stopped (or suppressed), as illustrated in Fig. 12.

Specifically, in the first selection method described above, the information processing device 10 acquires noise information regarding noise of the noise source 70 on the premise of a case where it is detected that the installation position of the operating apparatus 20-1 is closer to the position of the user 1. This noise information includes, for example, information indicating whether the noise of the noise source 70 can be controlled or not, in addition to the noise direction or the noise level.

In a case where it is possible to stop (or suppress) the noise generated by the noise source 70 existing in the vicinity of the operating apparatus 20-1, the information processing device 10 controls to stop (or suppress) the noise of the noise source 70 on the basis of the acquired noise information (S1). Furthermore, the information processing device 10 selects an operating apparatus 20-1 closer to the position of the user 1 as the selected operating apparatus.

Then, the information processing device 10 outputs a voice corresponding to the command (outputted at the same reproduction volume as voice output in the first selection method described above, for example) while this noise is stopped (or suppressed).

### (e) Fifth example

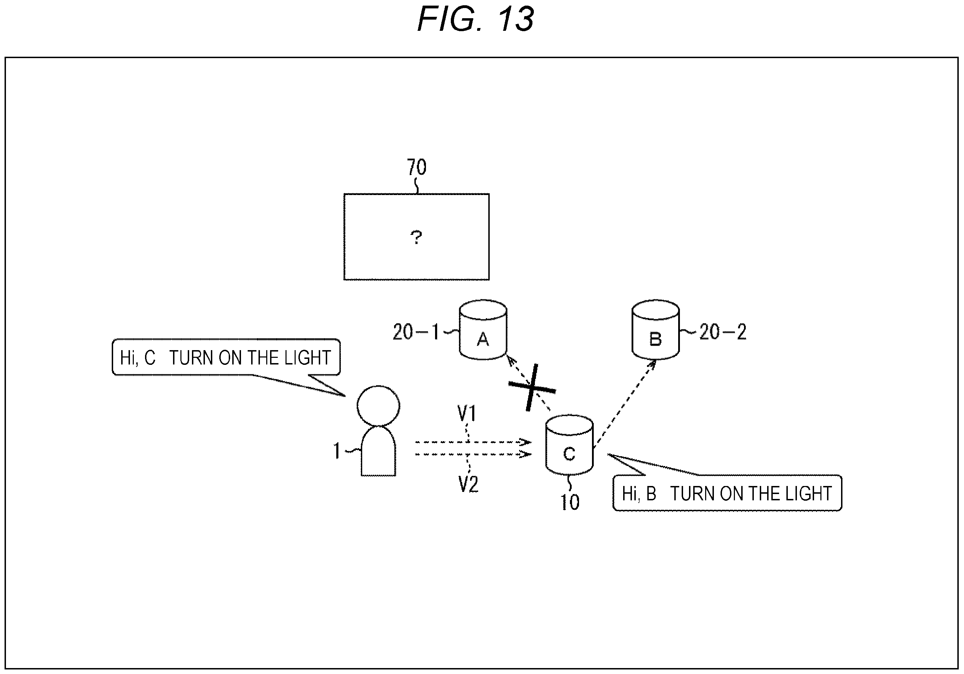

As a fifth selection method, there is a method of selecting an operating apparatus 20 more suitable for the environment as the selected operating apparatus for each of repeated utterances in a case where the same utterance is repeatedly made by the user 1, as illustrated in Fig. 13.

Specifically, in the fifth example of Fig. 13, the information processing device 10 selects the operating apparatus 20-1 as the selected operating apparatus and outputs a voice on the premise of a case where it is detected that the installation position of the operating apparatus 20-1 is closer to the position of the user 1 by the first selection method described above.

In this case, in a case where voice operation to the operating apparatus 20-1 fails due to the influence of sudden noise by the noise source 70 while the voice is outputted from the information processing device 10, it is assumed that the situation around the operating apparatus 20-1 is unknown and the same utterance is repeated by the user 1 in a short time (first utterance V1, second utterance V2, etc.).

At this time, the information processing device 10 selects an operating apparatus 20 more suitable for the environment at that time as the selected operating apparatus for the second and subsequent utterances so that a predetermined voice is outputted.

Here, for example, in a case where the second utterance V2 is made after the voice output to the operating apparatus 20-1 corresponding to the first utterance V1 fails, the information processing device 10 can switch the target of voice output to the operating apparatus 20-2 more suitable for the environment as the selected operating apparatus, for example, or increase the reproduction volume of the voice output while leaving the operating apparatus 20-1.

As described above, five selection methods have been illustrated as methods of selecting a selected operating apparatus.

### (Flow of command reproduction process)

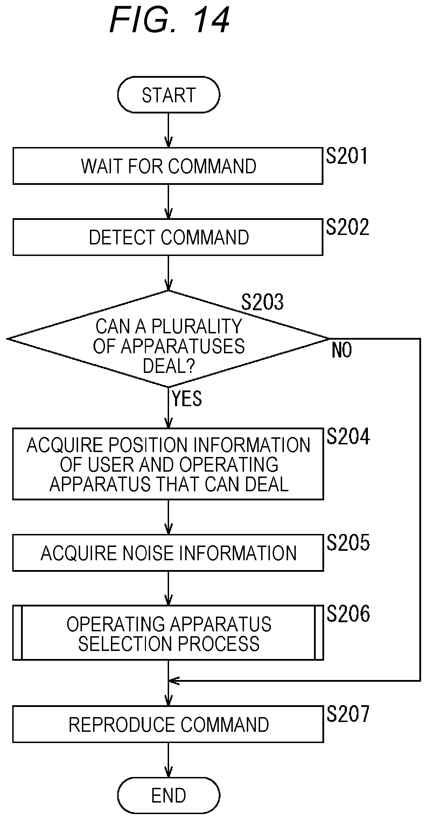

Next, the flow of a command reproduction process to be executed by (control unit 100 of) the information processing device 10 will be described with reference to the flowchart of Fig. 14. However, this command reproduction process will be described including a case where the function (command) corresponding to the utterance of the user 1 can be dealt with by a plurality of operating apparatuses 20.

The control unit 100 waits for a command corresponding to an utterance of the user 1 on the basis of a voice signal collected by the microphone 103 (S201), and in a case where an utterance is made by the user 1, detects a command corresponding to the utterance on the basis of the operation information (S202). When a command is detected in the process of step S202, the process proceeds to step S203.

In step S203, the control unit 100 judges whether or not the detected command can be dealt with by a plurality of operating apparatuses 20. In a case where it is judged in step S203 that the command can be dealt with by a plurality of operating apparatuses 20, the process proceeds to step S204, and the processes of step S204 to step S206 are executed.

That is, the control unit 100 acquires the position information of the user 1 and the position information of the plurality of operating apparatuses 20 that can deal with the command, respectively (S204).

Here, as an acquisition method of position information, a known technique can be used and position information can be acquired by, for example, processing information obtained by sensing by the sensor unit, information obtained by analyzing a captured image captured by a camera unit, information measured by a positioning system such as a global positioning system (GPS), or the like.

Furthermore, in a case where the noise source 70 exists, the control unit 100 acquires noise information including at least information regarding the direction of the noise and the noise level (S205).

Here, a known technique can be used as an acquisition method of noise information, and noise information can be acquired by, for example, analyzing a voice signal collected by the microphone 103, or analyzing information obtained by sensing by the sensor unit.

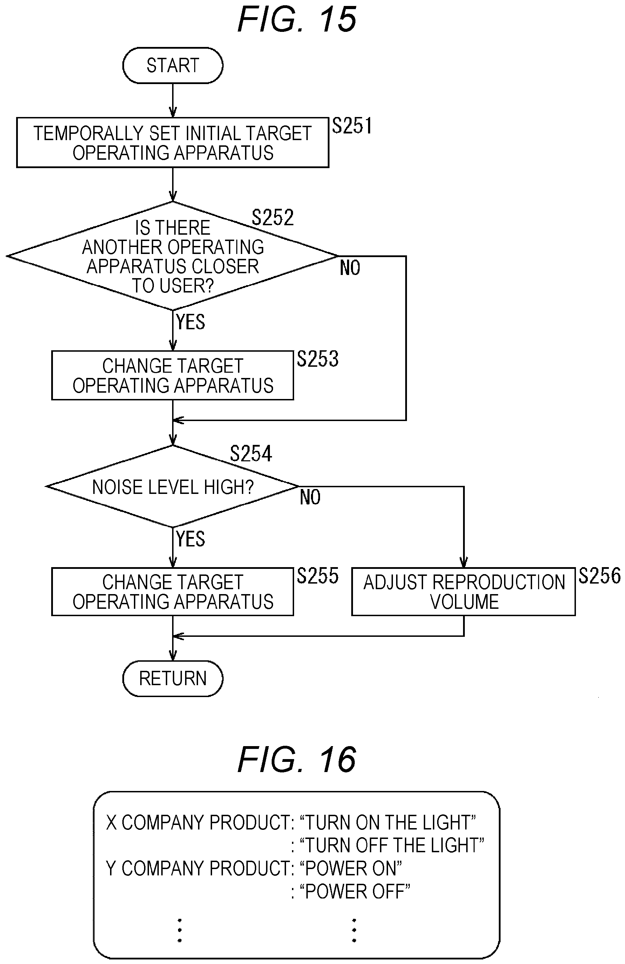

Then, the control unit 100 executes an operating apparatus selection process for selecting (determining) an operating apparatus 20 to be the target of voice output on the basis of the acquired position information and noise information (S206). By this operating apparatus selection process, the operating apparatus 20 whose voice output is more easily recognized is selected as the selected operating apparatus from a plurality of operating apparatuses 20. Note that the details of the operating apparatus selection process will be described later with reference to the flowchart of Fig. 15.

When a selected operating apparatus is selected from the plurality of operating apparatuses 20 in the process of step S206, the process proceeds to step S207. In step S207, the control unit 100 reproduces the detected command and outputs a voice to the operating apparatus 20 whose voice output is more easily recognized. Note that the voice outputted at this time may be, for example, a synthetic voice or a recorded voice.

In step S203, note that the processes of step S204 to step S206 are skipped and the process proceeds to step S207 in a case where a plurality of operating apparatuses 20 cannot deal, that is, in a case where only one operating apparatus 20 that can deal exists. In this case, the control unit 100 outputs a voice (outputs synthetic voice or recorded voice, for example) corresponding to a command to one operating apparatus 20 that can deal.

When the process of step S207 ends, the command reproduction process illustrated in Fig. 14 is terminated.

The flow of command reproduction process has been described above.

### (Flow of operating apparatus selection process)

Next, the flow of an operating apparatus selection process corresponding to the process of step S206 in Fig. 14 will be described with reference to the flowchart of Fig. 15.

First, the control unit 100 temporarily sets an initial target operating apparatus 20 among a plurality of operating apparatuses 20 (S251), and the process proceeds from step S251 to step S252.

In step S252, the control unit 100 judges whether an operating apparatus 20 other than the initial target operating apparatus 20 exists in a direction toward the user 1 or not on the basis of the position information. In a case where it is judged in step S252 that another operating apparatus 20 exists, the process proceeds to step S253.

In step S253, the control unit 100 changes the target operating apparatus 20 from the initial target operating apparatus 20 to the another operating apparatus 20 judged to exist closer to the user 1, and the process proceeds from step S253 to step S254.

Note that in a case where it is judged in step S252 that no other operating apparatus 20 exists, the process of step S253 is skipped, and the process proceeds to step S254. In this case, the initial target operating apparatus 20 is used as the target operating apparatus 20 as it is.

In step S254, the control unit 100 judges whether the noise level emitted from the noise source 70 in a specific direction becomes equal to or higher than a predetermined threshold value or not on the basis of the noise information (S254). In a case where it is judged in step S254 that the noise level becomes equal to or higher than a predetermined threshold value, that is, in a case where the noise level is high, the process proceeds to step S255.

In step S255, the control unit 100 changes the target operating apparatus 20 from an operating apparatus 20 installed in the direction of noise from the noise source 70 (e.g., initial target operating apparatus 20, or another operating apparatus 20 existing closer to user 1) to an operating apparatus 20 installed in a direction different from the direction of noise from the noise source 70.

On the other hand, in a case where it is judged in step S254 that the noise level is lower than a predetermined threshold value, that is, in a case where the noise level is low, the process proceeds to step S256.

In step S256, the control unit 100 adjusts the reproduction volume of the voice outputted to the target operating apparatus 20 (e.g., initial target operating apparatus 20, or another operating apparatus 20 existing closer to user 1). Here, as the adjustment of the reproduction volume, for example, an adjustment is made to raise the reproduction volume up to a preset predetermined volume (loudness).

Note that an appropriate value according to the environment can be suitably set as a predetermined threshold value that serves as a reference for judging the noise level.

When the process of step S255 or step S256 ends, the process returns to step S206 of Fig. 14, and the subsequent processes are executed. That is, in the operating apparatus selection process illustrated in Fig. 15, an operating apparatus 20 that is the last target among the plurality of operating apparatuses 20 is regarded as the selected operating apparatus, and the command reproduction process will be executed at a predetermined reproduction volume for this selected operating apparatus.

The flow of the operating apparatus selection process has been described above.

### (Acquisition method of command information)

By the way, a command for performing voice operation of an operation target apparatus 30 can be added suitably according to the expansion of functions or the like. Here, for example, the model number or the like of the operation target apparatus 30 (IoT apparatus) is registered in advance together with an existing command, and which operating apparatus 20 (agent) can deal is set as command information.

Therefore, in a case where command information is acquired from the server 50 or the like via the network 60, the information processing device 10 can update the operation information on the basis of the acquired command information. Note that a command table including information of correspondence between a command for performing voice operation of an operation target apparatus 30 (IoT apparatus) and an operating apparatus 20 (agent), for example, can be used as this operation information.

Here, as illustrated in Fig. 16, assumed is a case where, for example, commands of "turn on the light" and "turn off the light" are registered for an operation target apparatus 30 (lighting equipment) that is a product of X Company, and commands of "power on" and "power off" are registered for an operation target apparatus 30 (television receiver) that is a product of Y Company in the command table by the user 1.

As the registration method here, for example, note that a method of registering various information using a mobile apparatus 40, a method of registering various information by voice interaction between the user 1 and the information processing device 10, or the like can be used as described above.

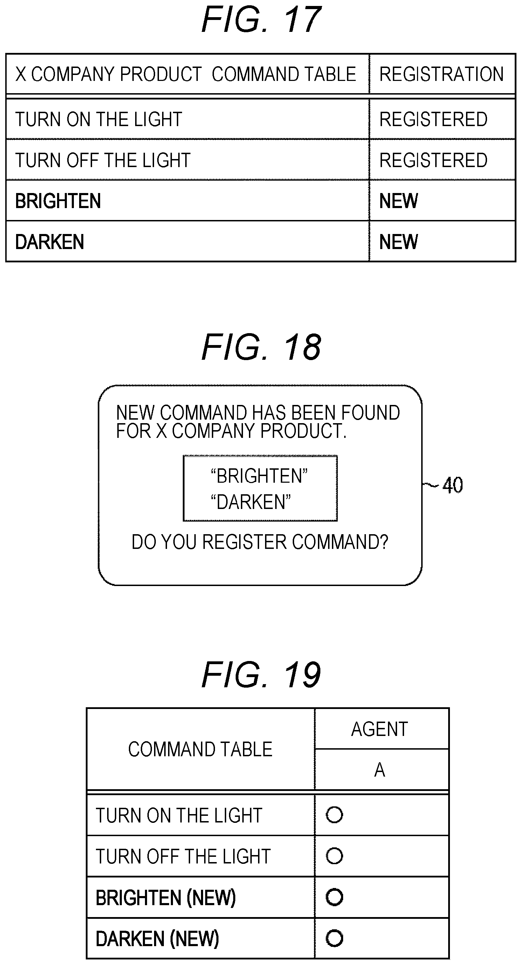

At this time, in a case where the command information illustrated in Fig. 17 is acquired from the server 50 or the like via the network 60, the information processing device 10 can register new commands in the command table on the basis of the acquired command information.

Specifically, the command information illustrated in Fig. 17 includes commands of "brighten" and "darken" as new commands for the operation target apparatus 30 (lighting equipment) that is a product of X Company. Although these new commands are considered to be commands that can be added to the command table, it is assumed here that the new commands are added after permission for registration is obtained from the user 1.

For example, as illustrated in Fig. 18, a message as to whether or not to register new commands for the operation target apparatus 30 (lighting equipment) that is a product of X Company can be noticed on a screen of the mobile apparatus 40 such as a smartphone. The information processing device 10 adds new commands to the command table only in a case where permission for registration of a noticed message is obtained according to the operation of the user 1.

Note that the timing of showing the message on the mobile apparatus 40 can be any timing such as when the command information is updated, or when the user 1 makes an utterance to the information processing device 10 (e.g., when existing command of target operation target apparatus 30 (lighting equipment) that is product of X Company is used), for example.

Furthermore, although an example of showing a message on the mobile apparatus 40 is illustrated here, the present invention is not limited to this, and the information processing device 10 may output a voice according to the message from the speaker 104 to give notification that a new command can be added, for example. Moreover, new commands may be forcibly added to the command table without notification by a message or voice output.

### (Example of command table)

Here, an example of a command table at the time of adding a command according to the command information will be described with reference to Figs. 19 to 22.

### (a) First example

Fig. 19 illustrates an example of a command table of a case where new commands corresponding to only one operating apparatus 20 are added.

Fig. 19 illustrates an example in which commands of "brighten" and "darken" can be newly added by the command information in a case where commands of "turn on the light" and "turn off the light" have already been registered in the command table as commands (commands for lighting equipment) that can be dealt with by the operating apparatus 20-1 as the agent A.

In the command table of Fig. 19, new commands of "brighten" and "darken" are added for the operating apparatus 20-1. In this addition, for example, new commands can be added to the command table only in a case where a message is shown on the mobile apparatus 40 at the timing when the command information acquired via the network 60 is updated and permission for the registration is obtained from the user 1 as described above.

### (b) Second example

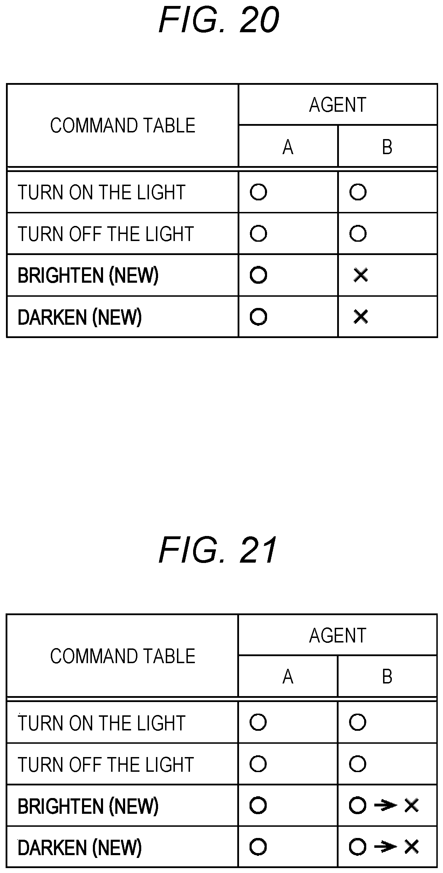

Fig. 20 illustrates an example of a command table of a case where new commands corresponding to a plurality of operating apparatuses 20 are added.

Fig. 20 illustrates an example of when commands of "brighten" and "darken" can be newly added by the command information in a case where commands of "turn on the light" and "turn off the light" have already been registered as commands that can be dealt with respectively by the operating apparatus 20-1 (agent A) and the operating apparatus 20-2 (agent B) in the command table.

At this time, the information processing device 10 can add new commands only for a desired agent by inquiring the user 1 of for which agent of the operating apparatus 20-1 and the operating apparatus 20-2 new commands are to be added. Here, for example, the new commands that can be added are shown on the mobile apparatus 40, so that the user 1 can register the new commands displayed on the screen of the mobile apparatus 40 in at least one of the operating apparatus 20-1 or the operating apparatus 20-2.

The command table in Fig. 20 illustrates an example of a case where the user 1 operates to register new commands only for the operating apparatus 20-1, and the new commands of "brighten" and "darken" are added only for the operating apparatus 20-1 (agent A).

Although the example in Fig. 20 illustrates a case where new commands are added for the operating apparatus 20-1, note that new commands may be added for the operating apparatus 20-2 according to the decision of the user 1. Furthermore, for example, if the user 1 decides that it is unnecessary to add a new command, it is unnecessary to add a new command for neither the operating apparatus 20-1 nor the operating apparatus 20-2.

Moreover, the method of inquiring the user 1 of adding a new command is not limited to the method of presenting the command on the screen of the mobile apparatus 40, and another inquiry method such as inquiring using voice output by the information processing device 10 may be used, for example.

### (c) Third example

Fig. 21 illustrates an example of a command table of when an operating apparatus 20 corresponding to the new command is unknown, that is, when an operating apparatus 20 that may possibly be able to deal exists.

Fig. 21 also illustrates an example of when new commands of "brighten" and "darken" can be added by the command information in a case where commands of "turn on the light" and "turn off the light" have already been registered in the command table as commands that can be dealt with respectively by the operating apparatus 20-1 (agent A) and the operating apparatus 20-2 (agent B).

At this time, the information processing device 10 adds (automatically adds) new commands for the operating apparatus 20-1 and the operating apparatus 20-2 that may possibly be able to deal without inquiring the user 1 (forcibly). Then, after that, the operation of the operating apparatus 20-1 and the operating apparatus 20-2 of a case where the information processing device 10 outputs a voice corresponding to a new command is monitored (operation behavior is checked), so that a new command can be left in the case of normal operation, or a new command can be deleted in the case of abnormal operation.

The command table of Fig. 21 illustrates an example of a case where the operating apparatus 20-1 operates normally for voice output corresponding to the new commands while the operating apparatus 20-2 does not operate normally for voice output corresponding to the new commands in a case where new commands are added (automatically added) for both the operating apparatus 20-1 and the operating apparatus 20-2.

That is, in the command table of Fig. 21, new commands of "brighten" and "darken" for the operating apparatus 20-1 (agent A) that operates normally are left, while new commands for the operating apparatus 20-2 (agent B) that does not operate normally are deleted (automatically deleted) after being added once.

### (d) Fourth example

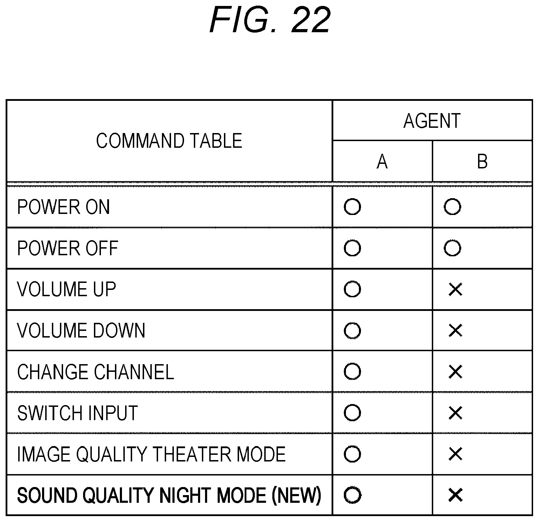

Fig. 22 illustrates an example of a command table of when an operating apparatus 20 that can deal is estimated in a case where an operating apparatus 20 corresponding to a new command is unknown, that is, an operating apparatus 20 that may possibly be able to deal exists.

In the command table in Fig. 22, "power on", "power off", "volume up", "volume down", "change channel", "switch input", and "image quality theater mode" have already been registered as commands (commands for television receiver) that can be dealt with by the operating apparatus 20-1 (agent A). Furthermore, in this command table, "power on" and "power off" have already been registered as commands that can be dealt with by the operating apparatus 20-2 (agent B).

Then, Fig. 22 illustrates an example of when a new command of "sound quality night mode" can be added by the command information in a case where such commands have already been registered respectively for the operating apparatus 20-1 and the operating apparatus 20-2.

At this time, the information processing device 10 estimates for which agent of the operating apparatus 20-1 and the operating apparatus 20-2 the new command is to be added (automatically added) from the commands registered in the command table, and adds (automatically adds) the new command according to the estimation result.

As this estimation process, for example, an agent that can accept a (similar) command highly related to a new command is estimated as an operating apparatus 20 that can deal, and a new command can be added for the operating apparatus 20. Furthermore, an estimation process may be performed here using information such as whether the operating apparatus 20 is explicitly instructed by announcement on the operation target apparatus 30 side or not, or whether the standby scale (the number of commands that can be dealt with) of the operating apparatus 20 is sufficient or not.

Specifically, in the command table of Fig. 22, a command of high-level voice operation such as "image quality theater mode" is registered for the operating apparatus 20-1 in addition to commands of basic voice operation such as "power on", and it can be said that "sound quality night mode" as a new command is a command of high-quality voice operation. At this time, it is estimated that the operating apparatus 20-1 (agent A) to which a (similar) command highly related to the new command of "sound quality night mode" is allocated is an operating apparatus 20 that can deal, and the new command is added (automatically added).

On the other hand, in the command table of Fig. 22, only commands of basic voice operation such as "power on" are registered for the operating apparatus 20-1. At this time, it is not estimated that the operating apparatus 20-2 (agent B) to which only (dissimilar) commands lowly related to the new command of "sound quality night mode" are allocated is an operating apparatus 20 that can deal, and addition of the new command is postponed.

### (Example of expansion of configuration)

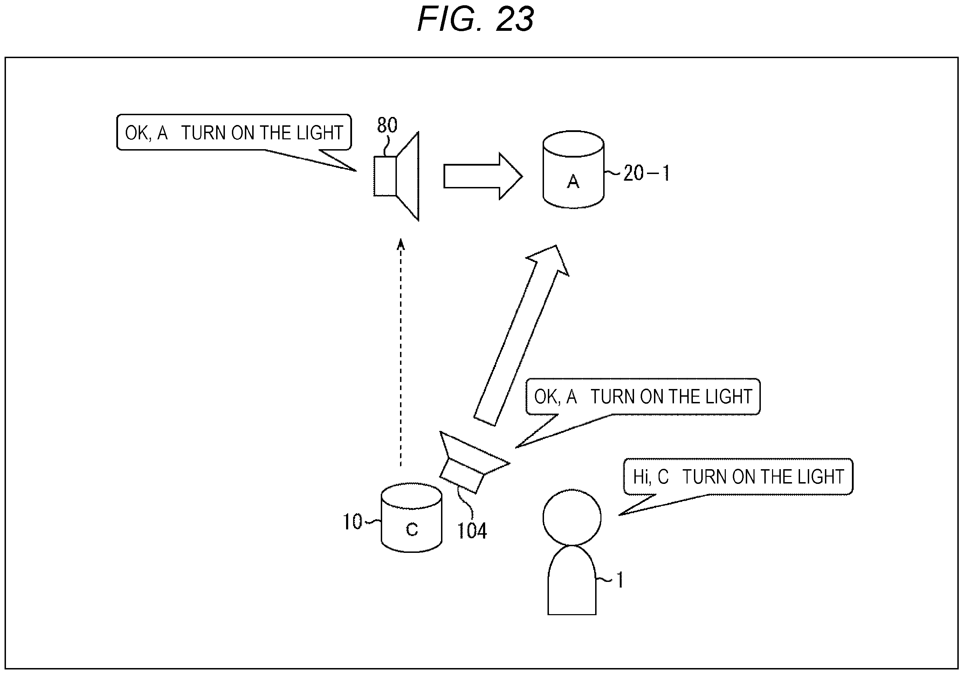

Fig. 23 illustrates an example of expansion of configuration using a speaker device for distributed arrangement.

In Fig. 23, a speaker device 80 for distributed arrangement is further provided in a case where the information processing device 10 is provided for the operating apparatus 20-1 and the operating apparatus 20-2. In Fig. 23, the speaker device 80 for distributed arrangement is installed at a position closer to the operating apparatus 20-1 than the information processing device 10. Note that the information processing device 10 and the speaker device 80 can communicate with each other by, for example, wireless communication, infrared communication, or the like, and can exchange various data.

For example, in a case where the user 1 makes an utterance of "Hi, C, turn on the light" and when output of a voice of "OK, A, turn on the light" is determined for the operating apparatus 20-1, the information processing device 10 selects one speaker suitable for the environment from the built-in speaker 104 and the speaker device 80 for distributed arrangement, so that a voice is outputted from the selected speaker.

For example, in the information processing device 10, the control unit 100 analyzes the noise information (noise level) obtained from a voice signal collected by the microphone 103, and the noise information (noise level) transmitted from an apparatus (e.g., microphone for distributed speaker, etc.) installed in the vicinity of the operating apparatus 20-1.

Here, the microphone for the distributed speaker is installed at a position spatially closer to the operating apparatus 20-1 than the installation position of the information processing device 10, for example, and can notify the information processing device 10 of the noise information (noise level) obtained from a collected voice signal.

Note that the microphone for the distributed speaker may be built in the speaker device 80 for distributed arrangement, or may be configured as a microphone device for the distributed speaker by itself and installed separately from the speaker device 80 for distributed arrangement. Furthermore, the microphone for a distributed arrangement speaker may detect a recognition error of the operating apparatus 20-1 and notify the information processing device 10.

Then, the information processing device 10 uses communication such as wireless communication to output voice from the speaker device 80 for distributed arrangement in a case where it is judged that the speaker device 80 for distributed arrangement is suitable for the environment on the basis of the analysis result of noise information. Here, in a case where the operating apparatus 20-1 and the speaker device 80 are installed in a room different from the information processing device 10, for example, voice is outputted from the speaker device 80 for distributed arrangement, so that it is possible to prevent the user 1 from being subjected to an explosive sound from being outputted from a speaker (speaker 104) at hand.

Furthermore, more specifically, it is assumed that the information processing device 10 selects an operating apparatus 20-1 whose voice output is more easily recognized as the selected operating apparatus in a case where the operating apparatus 20-1 and the operating apparatus 20-2 can accept the same command, for example. At this time, even if it is judged that the noise level in a direction toward the operating apparatus 20-1 is small, this judgement result is based on the noise information obtained from a voice signal collected by the microphone 103. Therefore, there actually is a possibility that loud noise is generated in the vicinity of the operating apparatus 20-1.

At this time, the information processing device 10 can select a speaker suitable for the environment, determine the direction of the voice to be outputted from the speaker, or reselect the target operating apparatus 20, and can improve the performance of voice operation by, for example, using the noise information obtained by the microphone for the distributed speaker installed in the vicinity of the operating apparatus 20-1.

Furthermore, the information processing device 10 can judge that the speaker 104 is suitable for the environment even if loud noise is generated in the vicinity of the operating apparatus 20-1, for example, in a case where the built-in speaker 104 is a speaker with strong directivity (strongly directional speaker) and can reliably output voice toward the installation position of the operating apparatus 20-1.

In a case where the speaker 104 as such a strongly directional speaker is used to output voice to the operating apparatus 20-1, that is, when the directivity characteristic in which the reproduction directivity is selected is adjusted, the voice output will not be heard loudly by the user 1 even if the reproduction volume of the voice output is large.

### (Flow of user utterance registration process)

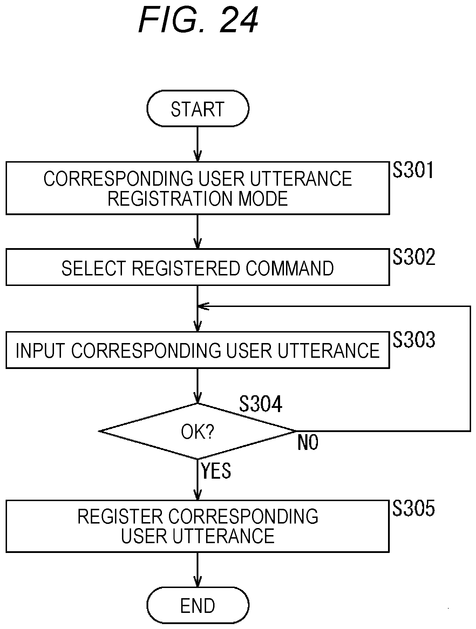

Next, the flow of the user utterance registration process to be executed by the information processing device 10 will be described with reference to the flowchart of Fig. 24.

In a case where the user 1 makes an utterance such as "Hi, C, register utterance", for example, the information processing device 10 starts the operation in the corresponding user utterance registration mode (S301), and selects a registered command from the command table (S302).

At this time, the utterance of the user 1 corresponding to the selected registered command is inputted in the information processing device 10 (S303). For example, the utterance is inputted by the user 1 making an utterance corresponding to the registered command.

Here, the process of step S303 is repeated until the input of the utterance of the user 1 is normally completed ("YES" in S304), and when the input of the utterance is completed normally, the process proceeds to step S305. Then, the information processing device 10 registers the utterance of the user 1 in association with the selected registered command (S305). Note that the user utterance registration process is terminated when the process of step S305 ends.

As described above, the information processing device 10 can recognize a speaker, and reproduce a command and output voice only for utterances from a specific user by registering utterances of each user in association with registered commands in the command table, for example. Alternatively, if utterances of each user are registered as recorded voice, it is possible to output the recorded voice according to the user when a command corresponding to an utterance from the user is reproduced.

The flow of the user utterance registration process has been described above.

### (Flow of command reproduction process)

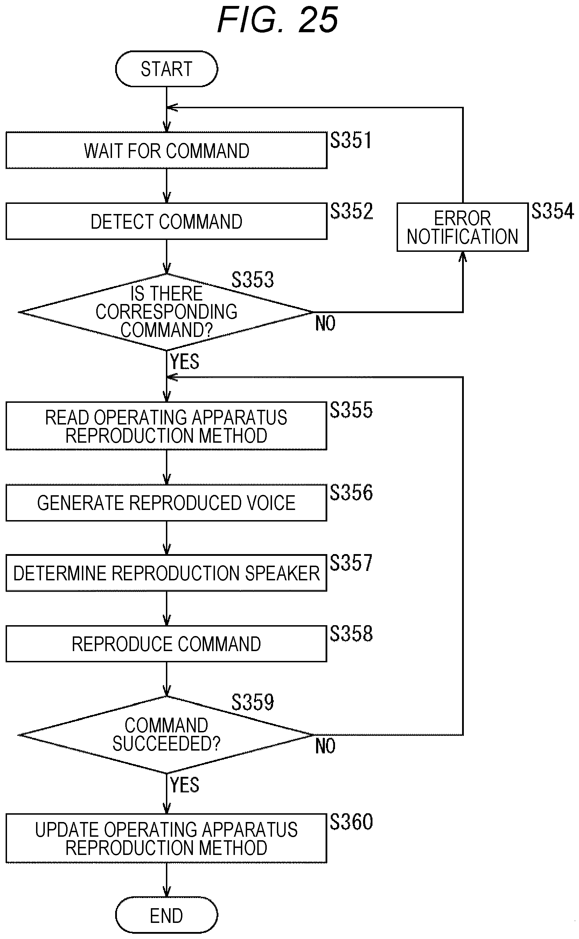

Next, the flow of the command reproduction process to be executed by (the control unit 100 of) the information processing device 10 will be described with reference to the flowchart of Fig. 25. However, this command reproduction process will be described without including a case where the command corresponding to the utterance of the user 1 can be dealt with by a plurality of operating apparatuses 20.

The control unit 100 waits for a command corresponding to the utterance of the user 1 on the basis of a voice signal collected by the microphone 103 (S351) and, in a case where the utterance is made by the user 1, detects a command corresponding to the utterance (S352). When a command is detected in the process of step S352, the process proceeds to step S353.

In step S353, the control unit 100 judges whether the command corresponding to the detected command has been already registered in the command table or not. In a case where it is judged in step S353 that the corresponding command has not been registered, the process proceeds to step S354. In this case, error notification is given (S354), and thereafter, the processes of step S351 to step S353 are repeated.

Furthermore, in a case where it is judged in step S353 that the corresponding command has been registered, the process proceeds to step S355, and the processes of step S355 to step S358 are executed.

That is, the control unit 100 reads information (reproduction information) regarding the reproduction method for the operating apparatus 20 (S355).

This reproduction information includes, for example, information indicating whether the reproduction is from voice synthesis (e.g., text voice synthesis (TTS)) or a recording source or not, information indicating the volume, the frequency characteristic (e.g., male or female, low voice or high voice, etc.) or the like, information regarding a reproducible speaker, noise information (noise direction or noise level), position information (information indicating positional relation with user 1), and the like.

Furthermore, the control unit 100 generates a reproduced voice corresponding to the detected command on the basis of the operation information or the reproduction information (S356). Here, in the case of reproduction by voice synthesis, for example, data obtained by converting the text of a command registered in the command table into voice is used. Furthermore, in the case of reproduction by a recording source, for example, data of the recording source recorded in the memory 101 (e.g., data of the recorded voice of the user 1) is read out and used.

Moreover, the control unit 100 determines a speaker that reproduces the reproduced voice on the basis of the operation information or the reproduction information (S357). Here, for example, an appropriate speaker is determined from speakers including the remote-installed speaker device 80 for distributed arrangement in addition to the speaker 104 built in the information processing device 10.

Therefore, an appropriate speaker can be changed for each operating apparatus 20, for example. Furthermore, although not only a case where the information processing device 10 and the operating apparatus 20 are installed in the same room but also a case where they are installed in different rooms are assumed, it is only required to select (determine) a speaker device 80 if the speaker device 80 for distributed arrangement is installed in the same room as the operating apparatus 20, for example, even in a case where the information processing device and the operating apparatus are installed in different rooms.

Then, in step S358, the control unit 100 outputs the voice generated in step S356 (e.g., synthetic voice or recorded voice) from the appropriate speaker determined in step S357, so that the detected command is reproduced and voice corresponding to the command is outputted.

Here, note that the control unit 100 outputs the reproduced voice with appropriate characteristic on the basis of the reproduction information. Specifically, it is possible to output the voice by changing the volume for each operating apparatus 20, for example, by making the voice outputted at an appropriate reproduction volume, for example. Then, when the command is reproduced in the process of step S358, the process proceeds to step S359.

In step S359, the control unit 100 judges whether the command outputted by voice has succeeded or not, that is, whether the command has been recognized by the operating apparatus 20 and voice operation corresponding to the utterance of the user 1 has been performed by the operation target apparatus 30 or not.

In a case where it is judged in step S359 that the reproduced command has failed, the process returns to step S355, and the processes of step S355 to step S358 described above are repeated.

Here, note that it is possible to detect a recognition error by the operating apparatus 20 and judge that the command has failed in a case where the operating apparatus 20 outputs a response voice of "fail to recognize" or a light emitting diode (LED) blinks, for example. Then, in a case where it is judged that the command has failed, the information processing device 10 reproduces the command again by changing the reproduction method or the reproduction speaker, or changing the reproduction volume (S355 to S358), for example.

Furthermore, in a case where it is judged in step S359 that the command outputted by voice has succeeded, the process proceeds to step S360.

In step S360, the control unit 100 updates the information (reproduction information) regarding the reproduction method for the operating apparatus 20.

That is, for example, information regarding a case where a command outputted by voice from the information processing device 10 succeeds and is recognized by the operating apparatus 20, or conversely, a case where a command fails and is not recognized by the operating apparatus 20 is recorded (updated) in the reproduction information and recorded as so-called log information, so that processing (e.g., processes from step S355 to step S358) that uses reproduction information (log information) after the update can be executed in the next and subsequent command reproduction processes.

Specifically, since the information processing device 10 updates the reproduction information and performs feedback for correcting the reproduction volume or the reproduction speaker every time the command reproduction processing is executed, for example, appropriate setting can be used for the reproduction volume, the speaking style, a speaker for reproduction, the directivity thereof, or the like, for example, on the basis of the result of the feedback. That is, the information processing device 10 can adaptively process each operating apparatus 20 by, for example, learning the setting at the time of success.

Note that the command reproduction process is terminated when the process of step S360 ends.

The flow of command reproduction process has been described above.

### <2. Second embodiment>

In the above description, it has been described that the information processing device 10 that receives all the utterances from the user 1 is provided, and the information processing device 10 outputs a voice according to the request content included in the utterance by the user 1 to the operating apparatus 20, so that the operation of the operation target apparatus 30 is controlled by the operating apparatus 20.

Here, the instruction given by the information processing device 10 to the operating apparatus 20 is not limited to voice output (command reproduction), and another instruction method may be used. As another instruction method, for example, wireless communication such as a wireless LAN, short-range wireless communication such as the Bluetooth (registered trademark), or the like can be used.

That is, in a case where the information processing device 10 detects a command corresponding to the utterance of the user 1, the information processing device 10 transmits information regarding the detected command (hereinafter, also referred to as control information) to the target operating apparatus 20 using wireless communication, short-range wireless communication, or the like. The target operating apparatus 20 controls the operation of the operation target apparatus 30 on the basis of the control information transmitted from the information processing device 10.

By exchanging control information between the information processing device 10 and the operating apparatus 20 in this way, the control information is transmitted via the network 60 in a case where voice operation of the operation target apparatus 30 is performed, and therefore control information can be exchanged accurately with low delay.

Furthermore, voice output or exchange of control information is an example of an instruction method, and any method may be used as long as the information processing device 10 gives an instruction to the operating apparatus 20 according to the request content included in the utterance by the user 1.

Then, by using these instruction methods, it is possible to select an appropriate operation target apparatus 20 (selected operating apparatus) on the basis of surrounding context information and the like, and further to select an appropriate command reproduction method even if a plurality of operating apparatuses 20 can operate at the same time, for example. Therefore, the user 1 can operate the desired operation target apparatus 30 unconsciously.

As another instruction method, note that the information processing device 10 may directly control the operation of the operation target apparatus 30, for example. In other words, the information processing device 10 controls the operation of the operation target apparatus 30 without going through the operating apparatus 20 as an agent. At this time, the information processing device 10 can control the operation of the operation target apparatus 30 even without recognizing the control method of each operating apparatus 20.

### <3. Variations>

### (Other examples of configuration)

Although the above description has illustrated a configuration (configuration illustrated in Fig. 2) in which two operating apparatuses 20-1 and 20-2 are respectively provided for one information processing device 10 and five operating target apparatuses 30-1 to 30-5 are respectively provided for two operating apparatuses 20-1 and 20-2, the number of these apparatuses is not limited, and a configuration in which a plurality of operating apparatuses 20 and a plurality of operation target apparatuses 30 are provided can be employed.

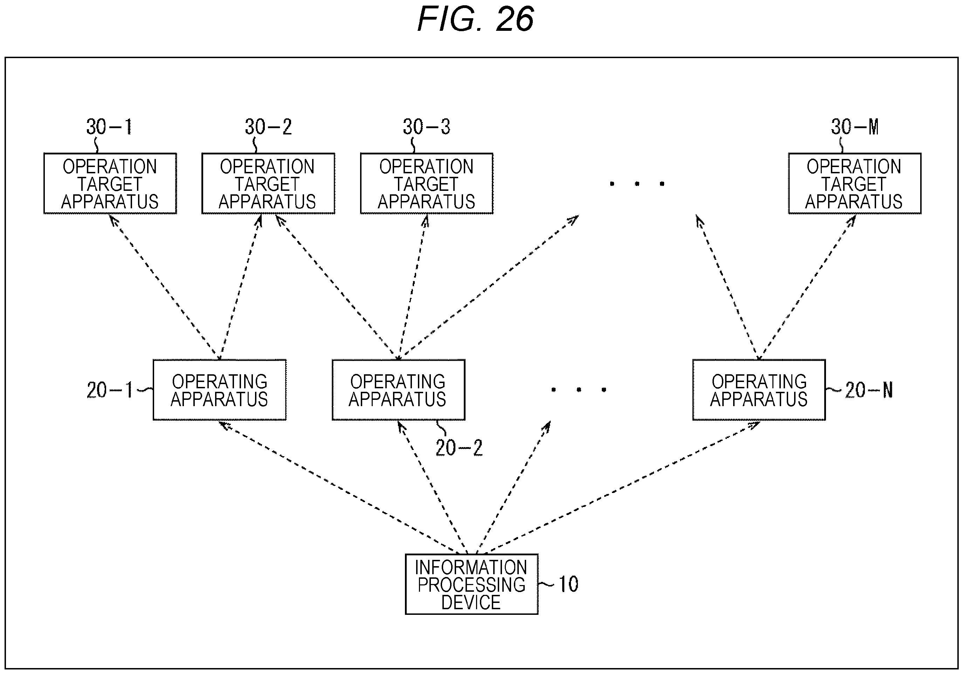

Fig. 26 illustrates another example of the configuration including an information processing device to which the present technology is applied.

The configuration illustrated in Fig. 26 includes the information processing device 10, operating apparatuses 20-1 to 20-N (N is an integer of 1 or larger), and operation target apparatuses 30-1 to 30-M (M is an integer of 1 or larger).

In Fig. 26, operating apparatuses 20-1 to 20-N are provided for the information processing device 10, and any of the operation target apparatuses 30-1 to 30-M is provided for each of the operating apparatuses 20-1 to 20-N. That is, a plurality of operating apparatuses 20 is provided for the information processing device 10, and one or a plurality of operation target apparatuses 30 is provided for each operating apparatus 20.

Although it has been described in the above description that the control unit 100 in the information processing device 10 on the local side includes the voice recognition processing unit 121 to the reproduction volume characteristic determination unit 126, note that all or some of the voice recognition processing unit 121 to the reproduction volume characteristic determination unit 126 may be incorporated in the server 50 on the cloud side. That is, each of the voice recognition processing unit 121 to the reproduction volume characteristic determination unit 126 may be incorporated in either apparatus of the information processing device 10 on the local side or the server 50 on the cloud side.

Furthermore, as a countermeasure for accessibility, information regarding various utterances may be presented on a screen of the information processing device 10 or the mobile apparatus 40, so that the user 1 is only required to simply select which utterance is to be reproduced from the information to start reproduction of synthetic voice by the information processing device 10.

Specifically, for example, since one or a plurality of preset utterances is displayed as a list after the button of "wake-up word" is operated, the user 1 is only required to select a button for the desired utterance from the list. Moreover, commands (interactive transitions) frequently used in the transition after the selected button may be displayed here in a list. Specifically, when the button of "register schedule" is selected after the button of "wake-up word" is operated, a command of "lunch" is displayed as a candidate. Here, note that the user 1 may perform input operation (text input) on the spot, and text according to the input operation may be reproduced by voice synthesis.

Furthermore, the series of processes described above (e.g., processes illustrated in flowchart of Fig. 7, Fig. 8, or the like described above) can be executed by hardware or software. In a case where a series of processes are executed by software, programs that configure the software are installed in the information processing device 10.

Then, in the information processing device 10, the control unit 100 (e.g., CPU) loads and executes a program recorded in a storage device (e.g., read only memory (ROM)) such as the memory 101 in a random access memory (RAM), so as to execute the series of processes described above.

Note that the program executed by the control unit 100 (e.g., CPU) can be recorded on a removable recording medium as a package medium or the like and provided, for example. Furthermore, a program can be provided via a wired or wireless transmission medium such as a local area network, the Internet, or digital satellite broadcasting.

Here, in the present disclosure, the processes performed by the control unit 100 (e.g., CPU) according to the program do not necessarily have to be performed in chronological order in the order described as the flowchart described above. That is, the processing performed by the control unit 100 (e.g., CPU) according to the program also includes processes executed in parallel or individually (e.g., parallel process or process by object). Furthermore, the program may be processed by one computer (processor) or may be distributed and processed by a plurality of computers.

Note that embodiments of the present technology are not limited to the embodiments described above, and various modifications can be made without departing from the gist of the present technology.

Furthermore, the present technology may have the following configurations.
(1) An information processing device including
   a control unit configured to perform control for giving an instruction on a function corresponding to an utterance for an operating apparatus that can operate an operation target apparatus having a function corresponding to the utterance on the basis of operation information regarding the operating apparatus that operates the operation target apparatus in a case where the utterance is made by a user.
(2) The information processing device according to (1),
   in which the control unit outputs voice corresponding to the instruction.
(3) The information processing device according to (2),
   in which the operation information includes information regarding a command for performing voice operation of the operation target apparatus for each operating apparatus, and
   the control unit outputs voice corresponding to the command based on the utterance to the operable operating apparatus.
(4) The information processing device according to (3),
   in which the control unit
   selects the operable operating apparatus whose voice output is more easily recognized from the operable operating apparatuses corresponding to the same command as a selected operating apparatus in a case where a plurality of operable operating apparatuses corresponds to the same command, and
   outputs voice corresponding to the command to the selected operating apparatus that has been selected.
(5) The information processing device according to (4),
   in which the control unit selects the selected operating apparatus on the basis of position information including information regarding the position of the user and the position of the operating apparatus.
(6) The information processing device according to (5),
   in which the control unit selects the operable operating apparatus existing closest to the user as the selected operating apparatus.
(7) The information processing device according to (5) or (6),
   in which the control unit selects the selected operating apparatus on the basis of noise information regarding noise from a noise source.
(8) The information processing device according to (7),
   in which the control unit
   selects the operable operating apparatus as the selected operating apparatus when the noise level of the noise source is less than a predetermined threshold value in a case where the noise source exists in the vicinity of the operable operating apparatus existing closest to the user, and
   outputs voice corresponding to the command to the selected operating apparatus that has been selected at a louder volume.
(9) The information processing device according to (7),
   in which the control unit
   selects another operable operating apparatus as the selected operating apparatus when the noise level of the noise source is equal to or higher than a predetermined threshold value in a case where the noise source exists in the vicinity of the operable operating apparatus existing closest to the user, and
   outputs voice corresponding to the command to the selected operating apparatus that has been selected.
(10) The information processing device according to (7),
   in which noise from the noise source can be stopped or suppressed, and
   the control unit
      selects the operable operating apparatus
      existing closest to the user as the selected operating
      apparatus, and
      outputs voice corresponding to the command to the selected operating apparatus that has been selected while noise from the noise source is stopped or suppressed.
(11) The information processing device according to (7),
   in which the control unit
   selects the operable operating apparatus existing closest to the user or another operable operating apparatus as the selected operating apparatus when affected by noise from the noise source while outputting voice corresponding to the command to the selected operating apparatus that has been selected, and
   outputs voice corresponding to the command again to the selected operating apparatus that has been selected.
(12) The information processing device according to any one of (3) to (11), further including
   a speaker,
   in which the control unit outputs voice corresponding to the command to the selected operating apparatus that has been selected from the speaker or an external speaker device.
(13) The information processing device according to (3),
   in which the control unit adds a new command to the operation information in a case where command information regarding the new command for performing voice operation of the operation target apparatus is acquired.
(14) The information processing device according to (13),
   in which the control unit
   inquires the user of whether a new command is to be added or not for each operating apparatus when adding the new command to the operation information, and
   adds the new command on the basis of inquiry result.
(15) The information processing device according to (13),
   in which the control unit
   monitors action of the operating apparatus in a case where voice corresponding to the new command added to the operation information is outputted, and
   leaves the new command in the operation information in a case where the operating apparatus acts normally, or deletes the new command from the operation information in a case where the operating apparatus does not act normally.
(16) The information processing device according to (13),
   in which the control unit
   estimates an operating apparatus for which the new command is to be added on the basis of a registered command included in the operation information when adding the new command to the operation information, and
   adds the new command for each operating apparatus on the basis of estimation result.
(17) The information processing device according to any one of (13) to (16),
   in which the command information is acquired from a server via a network.
(18) The information processing device according to (3),
   in which a new command for performing voice operation of the operation target apparatus is added to the operation information in response to operation of a mobile apparatus by the user.
(19) The information processing device according to (3),
   in which a new command for performing voice operation of the operation target apparatus is added to the operation information in response to an utterance by the user.
(20) An information processing method by an information processing device, the method including
   performing control for giving an instruction on a function corresponding to an utterance for an operating apparatus that can operate an operation target apparatus having a function corresponding to the utterance on the basis of operation information regarding the operating apparatus that operates the operation target apparatus in a case where the utterance is made by a user.

### REFERENCE SIGNS LIST

10 Information processing device
20, 20-1 to 20-N Operating apparatus
30, 30-1 to 30-M Operation target apparatus
40 Mobile apparatus
50 Server
60 Network
80 Speaker device
100 Control unit
101 Memory
102 Communication unit
103 Microphone
104 Speaker
105 Power supply unit
121 Voice recognition processing unit
122 Command analysis unit
123 Reproduction command determination unit
124 Command correspondence generation unit
125 Reproduced voice generation/reading unit
126 Reproduction volume characteristic determination unit

## Claims

1. An information processing device comprising
a control unit configured to perform control for giving an instruction on a function corresponding to an utterance for an operating apparatus that can operate an operation target apparatus having a function corresponding to the utterance on a basis of operation information regarding the operating apparatus that operates the operation target apparatus in a case where the utterance is made by a user.

2. The information processing device according to claim 1,
wherein the control unit outputs voice corresponding to the instruction.

3. The information processing device according to claim 2,
wherein the operation information includes information regarding a command for performing voice operation of the operation target apparatus for each operating apparatus, and
the control unit outputs voice corresponding to the command based on the utterance to the operable operating apparatus.

4. The information processing device according to claim 3,
wherein the control unit
selects the operable operating apparatus whose voice output is more easily recognized from the operable operating apparatuses corresponding to a same command as a selected operating apparatus in a case where a plurality of the operable operating apparatuses corresponds to the same command, and
outputs voice corresponding to the command to the selected operating apparatus that has been selected.

5. The information processing device according to claim 4,
wherein the control unit selects the selected operating apparatus on a basis of position information including information regarding a position of the user and a position of the operating apparatus.

6. The information processing device according to claim 5,
wherein the control unit selects the operable operating apparatus existing closest to the user as the selected operating apparatus.

7. The information processing device according to claim 5,
wherein the control unit selects the selected operating apparatus on a basis of noise information regarding noise from a noise source.

8. The information processing device according to claim 7,
wherein the control unit
selects the operable operating apparatus as the selected operating apparatus when a noise level of a noise source is less than a predetermined threshold value in a case where the noise source exists in a vicinity of the operable operating apparatus existing closest to the user, and
outputs voice corresponding to the command to the selected operating apparatus that has been selected at a louder volume.

9. The information processing device according to claim 7,
wherein the control unit
selects another operable operating apparatus as the selected operating apparatus when a noise level of the noise source is equal to or higher than a predetermined threshold value in a case where the noise source exists in a vicinity of the operable operating apparatus existing closest to the user, and
outputs voice corresponding to the command to the selected operating apparatus that has been selected.

10. The information processing device according to claim 7,
wherein noise from the noise source can be stopped or suppressed, and
the control unit
selects the operable operating apparatus existing closest to the user as the selected operating apparatus, and
outputs voice corresponding to the command to the selected operating apparatus that has been selected while noise from the noise source is stopped or suppressed.

11. The information processing device according to claim 7,
wherein the control unit
selects the operable operating apparatus existing closest to the user or another operable operating apparatus as the selected operating apparatus when affected by noise from the noise source while outputting voice corresponding to the command to the selected operating apparatus that has been selected, and
outputs voice corresponding to the command again to the selected operating apparatus that has been selected.

12. The information processing device according to claim 4, further comprising
a speaker,
wherein the control unit outputs voice corresponding to the command to the selected operating apparatus that has been selected from the speaker or an external speaker device.

13. The information processing device according to claim 3,
wherein the control unit adds a new command to the operation information in a case where command information regarding the new command for performing voice operation of the operation target apparatus is acquired.

14. The information processing device according to claim 13,
wherein the control unit
inquires the user of whether a new command is to be added or not for each operating apparatus when adding the new command to the operation information, and
adds the new command on a basis of inquiry result.

15. The information processing device according to claim 13,
wherein the control unit
monitors action of the operating apparatus in a case where voice corresponding to the new command added to the operation information is outputted, and
leaves the new command in the operation information in a case where the operating apparatus acts normally, or deletes the new command from the operation information in a case where the operating apparatus does not act normally.

16. The information processing device according to claim 13,
wherein the control unit
estimates an operating apparatus to which the new command is to be added on a basis of a registered command included in the operation information when adding the new command to the operation information, and
adds the new command for each operating apparatus on a basis of estimation result.

17. The information processing device according to claim 13,
wherein the command information is acquired from a server via a network.

18. The information processing device according to claim 3,
wherein a new command for performing voice operation of the operation target apparatus is added to the operation information in response to operation of a mobile apparatus by the user.

19. The information processing device according to claim 3,
wherein a new command for performing voice operation of the operation target apparatus is added to the operation information in response to an utterance by the user.

20. An information processing method by an information processing device, the method comprising
performing control for giving an instruction on a function corresponding to an utterance for an operating apparatus that can operate an operation target apparatus having a function corresponding to the utterance on a basis of operation information regarding the operating apparatus that operates the operation target apparatus in a case where the utterance is made by a user.
